(19) **Europäisches Patentamt**
**European Patent Office**
**Office européen des brevets**

(11) **EP 1 965 327 A1**

(12) **EUROPEAN PATENT APPLICATION**
published in accordance with Art. 158(3) EPC

(43) Date of publication:
**03.09.2008 Bulletin 2008/36**

(21) Application number: **06828248.2**

(22) Date of filing: **05.12.2006**

(51) Int Cl.:
***G06F 21/00*** (2006.01)

(86) International application number:
**PCT/CN2006/003294**

(87) International publication number:
**WO 2007/065354 (14.06.2007 Gazette 2007/24)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **05.12.2005 CN 200510126683**
**09.12.2005 CN 200510131071**

(71) Applicant: **Beijing Sursen Co. Ltd.**
**Haidian District, Beijing 100083 (CN)**

(72) Inventors:
• **WANG, Donglin**
**Beijing 100083 (CN)**

• **GUO, Xu**
**Beijing 100083 (CN)**
• **LIU, Changwei**
**Beijing 100083 (CN)**
• **ZOU, Kaihong**
**Beijing 100083 (CN)**

(74) Representative: **Charles, Glyndwr**
**Reinhard-Skuhra-Weise & Partner GbR**
**Patentanwälte**
**Friedrichstrasse 31**
**80801 München (DE)**

(54) **A DOCUMENT DATA SECURITY MANAGEMENT METHOD AND SYSTEM**

(57) The present invention discloses a method for document data security control, applied to a docbase management system used for managing documents or docbases conforming with a universal document model. The method includes: creating a role of a docbase or document; granting a privilege to the role; using the role to log in the document or the docbase and checking the privilege of the logged role when accessing the document or docbase through the docbase management system. The present invention further discloses a system for document data security control and a docbase management system. The present invention can improve the security of document data.

Fig.11

**Description**

**Field of the invention**

The present invention relates to a document data processing technique, and particularly, to a method and system for document data security control and a Docbase Management System.

**Background of the invention**

Information can be divided into structured data and unstructured data. The structure of structured data, i.e., a 2-dimentional table structure, is comparatively simple, and the structured data is typically processed by a database management system (DBMS). However, unstructured data mainly including a written document and streaming media does not have fixed data structure, which makes unstructured data processing very complicated.

Varieties of unstructured document processing applications are popular among users and different document formats are used at present, e.g., existing document editing applications include Microsoft Word, WPS, Yongzhong Office, Red Office, etc. Usually a contents management application has to handle two to three hundred ever updating document formats, which brings great difficulty to application developers. The document interoperability, digital contents extraction and format compatibility are becoming the focus of the industry, and problems as follows need solutions.

1) Documents are non-universal.

Users only can exchange documents processed with a same application, but cannot exchange documents processed with different applications, which causes information blockage.

2) Access interfaces are non-unified and data compatibility costs highly.

Since the document formats provided by different document processing applications are not compatible with each other, a component of another application should be used for a document processing application to parse an incompatible document (if that another application provides a corresponding interface) or a lot of research resources are spent in the software development stage to parse the document format from head to heel.

3) Information security is poor.

The security control measures for a written document are quite monotonous, mainly including data encryption and password authentication, and massive damages caused by information leak in companies are found every year.

4) Processes are only for single document and multi-document management is lack.

A person may have a large number of documents in his computer, but no efficient organization and management measure is provided for multiple document and it is difficult to share resources such as font/typeface file, full text index, etc..

5) Layer techniques are insufficient.

Some applications, e.g., Adobe Photoshop and Microsoft Word, have more or less introduced the concept of layer, yet functions and management of the layer are too simple to meet the practical demands.

6) Search methods are monotonous.

Massive information in the present networks results in a huge number of search results for any search keyword, and precision ratio has become the major concern while full text search technique has solved the problem of recall ratio. However, the prior art does not fully utilize all information to improve the precision ratio. For example, the font or size of characters, may be used for determining the importance of the characters, but are ignored by the present search techniques.

Large companies are all working to make their own document format the standard format in the market and standardization organizations are also bending to the creation of universal document format standard. Nevertheless, a document format, no matter a proprietary document format (e.g., .doc format) or an open document format (e.g., .PDF format), leads to problems as follows.

a) Repeated development and inconsistent performance

Different applications which adopt a same document format standard have to find their own ways to render and generate documents conforming with the document format standard, which results in repeated research and development. Furthermore, the rendering components developed by some applications provide full-scale functions while others provide only basic functions, some applications support a new version of the document format standard while others only support an old version, hence different applications may present a same document in different page layouts, rendering error may even occur with some applications which are consequentially unable to open the document.

b) Barrier to innovation

Software industry is an industry with ever-developing innovation, however, when a new function is added, description information of the function needs adding into corresponding standard, and a new format can only be brought forward when the standard is revised. Hence a fixed storage format holds back the technical innovation competition.

c) Impaired search performance

For massive information, more indexes need to be added so as to enhance search performance, yet it is hard for a fixed storage format to allow more indexes.

d) Impaired transplantability and scalability

Different applications in different system environments have different storage needs. For example, an application needs to reduce seek times of disk head to improve performance when the data saved in a hard disk, while an embedded application does not need to do that because the data of the embedded application are saved in system memory. And for example e.g., DBMS provided by a same manufacturer may use different storage formats on different platforms. Hence the document storage standards affect transplantablity and scalability of the system.

A method for document data security management applied to a docbase system used for managing documents or docbases in accordance with a universal document model, and the method for document data security management includes:

creating a role of a docbase or document;
granting a privilege to the role;
using the role to log in the document or the docbase and
checking the privilege of the logged role when accessing the document or docbase through the docbase system.

In prior art, the document format that provides best performance concerning openness and interchangeability is the PDF format from Adobe Acrobat. However, even though the PDF format has actually become a standard for document distribution and exchange around the globe, different applications cannot exchange PDF documents, i.e., PDF documents provides no interoperability. What's more, both Adobe Acrobat and Microsoft Office can process only one document at a time and can neither manage multiple documents nor operate with docbases.

In addition, the existing techniques are significantly flawed concerning document information security. Documents currently used in the widest range, e.g., Word documents and PDF documents, adopt data encryption or password authentication for data security control without any systematic identity authentication mechanism. The privilege control cannot be applied to a part of document but only to the whole document. The encryption and signature of logic data are limited, i.e., encryption and signature cannot be applied to arbitrary logic data. On the other hand, a contents management system, while providing satisfactory identity authentication mechanism, is separated with a document processing system and cannot be integrated with the document processing system on the core unit. Therefore the contents management system can only provide management down to the document level, and the document will be out of the security control of the contents management system when the document is in use. Hence essential security control cannot be achieved in this way. And the security and document processing are usually handled by separated modules, which may easily cause security breaches.

Some of existing security control techniques and concepts are introduced herein.

Current security control techniques usually adopt an asymmetric key encryption algorithm, also known as Public Key Infrastructure (PKI) algorithm. A key generated by the algorithm for encryption is different from the key for corresponding decryption. The key for encryption and the key for decryption do not lead to each other in deduction, i.e., when a user make one of the keys public, the other key can still remain private. Therefore others may encrypt a piece of information to be transmitted with the public key and transmit the cipher information safely to the user, and the user decrypts the cipher information with the private key. The PKI technique solves the problem of publishing and managing security keys and is the most common cryptograph technique at present. By using the PKI technique, two parties of a data transmission can safely authenticate the identity of each other and publish a key, i.e., the transmission can be authenticated. Common PKI algorithms at present include Elliptic Curves Cryptography (ECC) algorithm, Ron Rivest, Adi Shamir, Len Adleman (RSA) encryption algorithm, etc. The RSA encryption algorithm and ECC algorithm are explained in summary hereinafter.

1. RSA algorithm

Public key: n = pq, (p, q are two very large different prime numbers, and p and q must be kept secret);

$$\varphi(n)=(p-1) \times (q-1);$$

choose an integer e ($1<e<\varphi(n)$) which is relatively prime to $\varphi(n)$;

Private key: d = e-1mod$\varphi(n)$, i.e., find a number d which satisfy the equation de=1 mod$\varphi(n)$;

Encrypt: c = mc (mod n)

Decrypt: m=cd(mod n), wherein m is clear text and c is cipher text.

2. ECC algorithm

The ECC algorithm is another asymmetric key encryption algorithm which adopts Elliptic Curves in the encryption. The ECC algorithm has been studied in cryptanalysis even since the ECC algorithm came out, and an ECC system is considered to be safe in commercial and government applications. According to the present cryptanalysis, the ECC system provides better security than conventional cryptograph systems.

The ECC algorithm is explained as follows.

A normal curve equation can be transformed by an elliptic curve in the large prime field, through isomorphic mapping, into a simple equation: y2 = x3 + ax + b, wherein curve parameters a, b E Fp and 4a3 + 27b2 ≠ 0(mod p).

Hence all points (x,y) serving as the solution to the following equation, plus a point at infinity O∞, form an elliptic curve in the large prime field Fp:

$$Y2 = x3 + ax + b \ (\mathrm{mod} \ p).$$

In this equation x and y are large prime numbers in the field between 0 and p-1, and the elliptic curve is expressed as Ep(a,b).

In the equation:

K = kG, wherein K and G are points on the Ep(a,b) and k is an integer smaller than n , and n is the order of point G, it is obvious that, according to the rule for adding, when the k and G are given, it will be easy to obtain K through calculation, however, when K and G are given, it will be very difficult to obtain k.

This is the mathematical theory on which the ECC system is based. Point G is called a base point, k (k<n and n is the order of point G) is the private key and K is the public key.

The encryption algorithm can also include a commonly known symmetric algorithm, which provides a same key for both encryption and decryption. For example, Advanced Encryption Standard (AES) algorithm is a code algorithm developed to protect government information. Rijndael algorithm was selected from 15 candidate algorithms as the AES algorithm. The AES algorithm provides symmetric iterated block cipher. The algorithm divides data blocks into bit arrays and every cipher operation is bit oriented. The Rijndael algorithm includes four steps, the first step includes a $8 \times 8$ bit permutation(i.e., 8 bits of input and 8 bits of output), the second and third steps include linear mixing layers (i.e., shiftrows and mixcolumns in arrays) and the fourth step includes bitwise EXOR of expanded keys and arrays.

AES fixes the block length to 128 bits, and supports key lengths of 128, 192 or 256 bits, the numbers of round r corresponding to different key lengths are 10/12/14 respectively, and corresponding encryption schemes can be summarized as: r+1 expanded keys are needed in the encryption, and 4(r+1) 32-byte words shall be constructed. When the seed bits are 128 or 192 bits, the 4(r+1) 32-byte words are constructed in a same way; when the seed bits are 256 bits, the 4(r+1) 32-byte words shall be constructed in a different way.

Furthermore, HASH, also known as hashing, message digest or digital digest, is another concept commonly used for security information management. A one-way hash function takes a data of any length as input and produces a fixed length irreversible string, i.e., the HASH value of the data. Theoretically, all HASH algorithms inevitably have collision (a situation that occurs when two distinct inputs into a hash function produce identical outputs). A HASH algorithm is secure in two senses. Firstly, a HASH value cannot be used for reversed computation to retrieve the original data. Secondly, in practical calculation it is impossibility to construct two distinct data which have the identical HASH values, though the possibility is acknowledged in theory. MD5, SHA1 and SHA256 are considered as HASH algorithms relatively secure at present. In addition, the computation of HASH function is comparatively fast and simple.

## Summary of the Invention

The present invention provides a method and system for document data security control and a docbase management system to eliminate the security flaws in the document processing techniques described in the foregoing introduction. The present invention provides a powerful embedded information security function which applies information security technology in the core unit to offer maximum security to documents.

The present invention discloses a technical scheme to attain the objective of the present invention.

The present invention discloses a method for document data security control applied to a docbase management system used for managing documents or docbases conforming with a universal document model, and the method for document data security control includes:

> creating a role of a docbase or document;
> granting a privilege to the role;
> using the role to log in the document or the docbase and
> checking the privilege of the logged role when accessing the document or docbase through the docbase management system.

In this technical scheme, the step of granting a privilege to the role further includes: granting to the role a privilege on part of or all the objects in a universal document model instance. Part of or all the objects in the universal document model instance include any one or any combination of a docbase object, docset object, document object, page object, layer In the system In the system object, object stream and layout object.

In this technical scheme, the step of granting a privilege to the role further includes: issuing a privilege request by the application to request granting a target privilege to a target role on a target object; calculating the combination of the privileges of all the logged roles of the application on the target object and adding the target privilege into the privileges of the target role if the combination is a superset of the target privilege and possesses re-license privilege.

When the target privilege includes read privilege, after the step of adding the target privilege into the privileges of the target role, this technical scheme may further include: saving the target object in an encryption mode and saving the decryption key of the target object into the target role.

When the target privilege includes write privilege, after the step of adding the target privilege into the privilege of the target role, this technical scheme may further include: saving the target object in an encryption mode and saving the encryption key of the target object into the target role.

In this technical scheme, the step of saving the decryption key of the target object in the target role may include: encrypting the decryption key with a key corresponding to the role to obtain the cipher data of the decryption key and saving the cipher data of the decryption key.

In this technical scheme, the step of saving the encryption key of the target object in the target role may include: encrypting the encryption key with a key corresponding to the role to obtain the cipher data of the encryption key and saving the cipher data of the encryption key.

In this technical scheme, the step of saving the target object in an encrypted mode may include: generating a random symmetric key and a random PKI key pair; encrypting the target object with the symmetric key; encrypting the symmetric key with the encryption key of the PKI key pair to obtain the cipher data of the symmetric key, saving the cipher data of the symmetric key and signing the target object to obtain a signature. The technical scheme may further include: signing an object in the docbase or in the document to obtain a digital signature.

In this technical scheme, the step of signing the object may further include: regularizing the object, calculating the HASH value of the regularization result and sending the HASH value to the application; encrypting by the application the HASH value with the private key of the logged role of the application and returning a signature result.

The present invention also discloses a regularization method for regularizing a tree structure; the method includes: regularizing each node in the tree structure according to a predetermined traversal order, and joining the regularization result of each node to obtain the regularization result of the tree structure.

In this technical scheme, the step of regularizing each node in the tree structure may include: joining, according to a predetermined order, original values or transformed values of: the sub-node number of the node, the node type and the node attributes, and taking the original value or transformed value of the join result as the regularization result of the node.

In this technical scheme, the step of regularizing each node in the tree structure may include: joining, according to a predetermined order, original values or transformed values of: the sub-node number of the node, the node type, the node attributes, as well as anyone or any combination of original values or transformed values of: the sub-node number length, the node type length and the node attribute lengths; and taking the original value or transformed value of the join result as the regularization result of the node.

The present invention also discloses a docbase management system used for security control of documents or docbases conforming with a universal document model, and the docbase management system includes:

a role management unit, used for creating a role of a document or docbase and granting a privilege to the role;
an identity authentication unit, used for authenticating the identity of the role through the role management unit when the role logs in the document or docbase; and
an access control unit, used for checking the privilege of the logged role through the role management unit and the identity authentication unit when accessing the document or the docbase.

In the system according to Claim 35, the role management unit is further used for granting to a role a privilege on part of or all the objects in the universal document model instance.

In the system, part of or all the objects in the universal document model instance include any one or any combination of: a docbase object, docset object, document object, page object, layer object, object stream and layout object.

The present invention further discloses a system for document data security control, and the system includes:

a role management unit, used for creating a role of a document and granting privilege on a document object, page object or sub-objects of page object to the role;
an identity authentication unit, used for authenticating the identity of the role through the role management unit when the role logs in the document; and
an access control unit, used for checking the privilege of the logged role through the role management unit and the identity authentication unit when accessing the document.

According to the present invention, a document processing technique based on separating the application layer and the data processing layer can integrate information security into the core unit of document processing. Therefore security breaches will be eliminated, and the security mechanism and document processing mechanism will be combined into one module instead of two module. More space is thus provided for security control and corresponding codes can thus be hidden deeper and used more effectively for defending illegal attack and improving security and reliability. In addition, fine-grained security control measures can be taken, e.g., more privilege classes and smaller management divisions can be adopted. The invention also provides a universal document security model which satisfies the demands of various applications concerning document security so that different applications can control document security via a same interface.

The merits of the present invention include that: the document data security control system, equipped with identity authentication mechanism, can grant access control privilege on arbitrary logic data or encrypt any logic data, wherein the encryption is associated with identity authentication, i.e., with any one role or multiple roles. The system of the present invention can further provide digital signatures for arbitrary logic data to achieve document data security control with multiple security attributes, and protects document data from being damaged.

## Brief description of the drawings

Fig. 1 is a block diagram of the structure of a document processing system.

Fig. 2 shows the organization structure of the universal document model in Preferred Embodiment of the present invention.

Fig. 3 shows the organization structure of the docbase object in the universal document model shown in Fig. 2.

Fig. 4 shows the organization structure of the docbase helper object in the docbase object shown in Fig. 3.

Fig. 5 shows the organization structure of the docset object in the docbase object shown in Fig. 3.

Fig. 6 shows the organization structure of the document object in the docset object shown in Fig. 5.

Fig. 7 shows the organization structure of the page object in the document object shown in Fig. 6.

Fig. 8 shows the organization structure of the layer object in the page object shown in Fig. 7.

Fig. 9 shows the organization structure of the layout object in the layer object shown in Fig. 8.

Fig. 10 shows a document processing system with UOML interface.

Fig. 11 is a flow chart of the method for document data security control provided by the present invention.

## Detailed description of the invention

The present invention is further described hereinafter in detail with reference to accompanying drawings and embodiments. It should be understood that the embodiments offered herein are used for explaining the present invention only and shall not be used for limiting the protection scope of the present invention.

The method and system for security control of the present invention are mainly applied to document processing systems described hereafter.

Problems existing among prior document processing applications include: poor universality, difficulties in extracting document information, inconsistent access interfaces, difficulties or high cost on achieving data compatibility, impaired transplantability and scalability, underdeveloped technique of dividing page into layers and too monotonous search method. In the prior art, one single application implements functions from user interface to document storage, the present invention solves the problem by dividing a document processing application into an application layer and a docbase management system layer. The present invention further sets up an interface standard for interaction between the two layers and may even further create an interface layer conforming with the interface standard. The docbase management system is a universal technical platform with all kinds of document processing functions and an application issues an instruction to the docbase management system via the interface layer to process a document, then the docbase management system performs corresponding operation according to the instruction. In this way, as long as different applications and docbase management systems conform with the same standard, different applications can process a same document through a same docbase management system, therefore document interoperability is achieved. Similarly, one application may process different documents through different docbase management systems without independent development on every document format.

Furthermore, the technical scheme of the present invention provides a universal document model which is compatible with documents to be processed by different applications. The interface standard is based on the document model so that different applications can process a document via the interface layer. The universal document model can be applied to all types of document formats so that one application may process documents in different formats via the interface layer. The interface standard defines various instructions based on the universal document model for initiating operations on documents and the way of issuing instructions by an application to a docbase management system. The docbase management system has functions to implement the instructions from the application. The universal document model also includes multiple hierarchies of document warehouse, docbase and docset which composed by multiple documents. And the interface standard includes instructions covering organization management, query, and security control, of multiple documents. In the universal model, a page is separated into multiple layers from bottom to top and the interface standard defines instructions for operations on the layers, storage and extraction of a source file corresponding to a layer in a document. In addition, the docbase management system has information security control functions for documents, e.g., role-based fine-grained privilege management, and corresponding operation instructions are defined in the interface standard.

According to the present invention, the application layer and the data processing layer are separated with each other. An application no longer needs to deal with a specific document format directly and a document format is no longer associated with a specific application. Therefore a document can be processed by different applications and an application can process documents in different formats and document interoperability is achieved. The whole document processing system can further process multiple documents instead of one document. When a page in a document is divided into multiple layers, different management and control policies can be applied to different layers to facilitate operations of different applications on the same page (it can be designed that different applications manage and maintain different layers) and further facilitate source file editing and it is also a good way to preserve the history of editing.

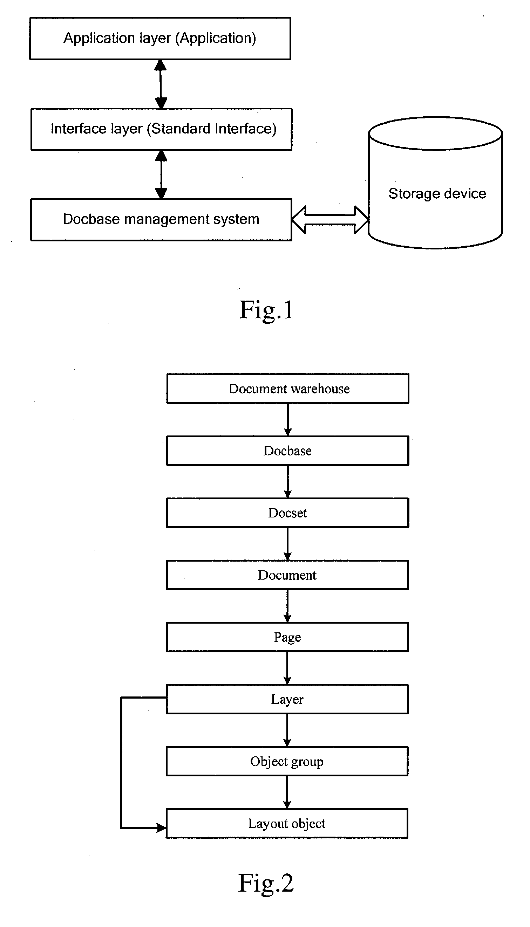

The document processing system in which the method and system for security control of the present invention are applied is explained in detail with reference to figures from Fig. 1 to Fig. 10.

As shown in Fig. 1, the document processing system in accordance with the present invention includes an application, an interface layer, a docbase management system and a storage device.

The application includes any of existing document processing and contents management applications in the application layer of the document processing system, and the application issues an instruction conforming with the interface standard for initiating an operation on documents. All operations are applied on documents conforming with the universal document model independent of the storage formats of the documents.

The interface layer conforms with the interface standard for interaction between the application layer and the docbase management system. The application layer issues standard instruction(s) to the docbase management system via the interface layer and the docbase management system returns the corresponding operation result to the application layer via the interface layer. It can be seen that, since all applications can issues standard instruction(s) via the interface layer to process a document conforming with the universal document model, different applications can process the same document through the same docbase management system and the same application can process documents in different formats through different docbase management systems.

Preferably, the interface layer includes an upper interface unit and a lower interface unit. The application can issue a standard instruction from the upper interface unit to the lower interface unit and the docbase management system receives the standard instruction from the lower interface unit. The lower interface unit is further used for returning the result of the operation performed by the docbase management system to the application through the upper interface unit. In practical applications, the upper interface unit can be set up in the application layer and the lower interface unit can be set up in the docbase management system.

The docbase management system is the core of the document processing system and performs an operation on a document according to standard instruction(s) from the application through the interface layer.

The storage device is the storage layer of the document processing system. A common storage device includes a hard disk or memory, and also can include a compact disc, flash memory, floppy disk, tape, remote storage device, or any kind of device that is capable of storing data. The storage device stores multiple documents and the way of storing the documents is irrelevant to applications.

It can thus be seen that the present invention enables the application layer to be separated from the data processing layer in deed. Documents are no longer associated with any specified applications and an application no longer needs to deal with document formats. Therefore different applications can edit a same document conforming with the universal document model and satisfactory document interoperability is achieved among the applications.

The embodiments of the document processing system provided by the present invention are described hereinafter.

Universal Document Model

The universal document model can be defined with reference to the features of paper since paper has been the standard means of recording document information, and the functions of paper are just enough to satisfy the practical needs in work and living.

If a page in a document is regarded as a piece of paper, all information put down on the paper should be recorded, so the universal document model which is able to describe all visible contents on the page is demanded. The page description language (e.g., PostScript) in the prior art is used for describing all information to be printed on the paper and will not be explained herein. However, the visible contents on the page can always be categorized into three classes: texts, graphics and images.

When the document uses a specific typeface or character, corresponding font shall be embedded into the documents to guarantee identical output on screens/printer of different computers. The font resources shall be shared to improve storage efficiency, i.e., only one font needs to be embedded when a same character is used for different places. An image sometimes may be used in different places, e.g., the image may be used as the background images of all pages or as a frequently appearing company logo and it will be better to share the image, too.

Obviously, as a more advanced information process tool, the universal document model not only imitates paper, but also develops some enhanced digital features, such as metadata, navigation, thread, thumbnail image which also can be called minipage, etc. Metadata includes data used for describing data, e.g., the metadata of a book includes information of author, publishing house, publishing date and ISBN. Metadata is a common term in the industry and will not be explained further herein. Navigation includes information similar to the table of contents of a book, and navigation is also a common term in the industry. The thread information describes the location of a passage and the order of reading, so that when a reader finishes a screen, the reader can learn what information should be displayed on the next screen. The thread also enables automatic column shift and automatic page shift without manually appointing a position by the reader. Thumbnail image includes miniatures of all pages and the miniatures are generated in advance, the reader may choose a page to read by checking the miniatures.

Fig.2 shows a universal document model in a preferred embodiment of the present invention. As shown in Fig. 2, the universal document model includes multiple hierarchies including a document warehouse, docbase, docset, document, page, layer, object stream which also can be called object group, and layout object (various kinds of objects used to describe page layout).

The document warehouse consists of one or multiple docbases, and the relation among docbases is not as strictly regulated as the relation among hierarchies within a docbase. Docbases can be combined and separated simply without modifying the data of the docbases, and usually no unified index is set up for the docbases (especially a fulltext index), so most of search operations on document warehouse traverse the indexes of all the docbases without an available unified index. Every docbase consists of one or multiple docsets and every docset consists of one or multiple documents and possibly a random number of sub docsets. A document includes a normal document file (e.g., a .doc document) in the prior art and the universal document model may define that a document may belong to one docset only or belong to multiple docsets. A docbase is not a simple combination of multiple documents but a tight organization of the documents, especially the great convenience can be brought after unified search indexes are established for the document contents.

Every document consists of one or multiple pages in an order (e.g., from the front to the back), and the size of the pages may be different. A page may be even not in a rectangle shape but in a random shape expressed by one or multiple closed curves.

Further a page consists of one or multiple layers in an order (e.g., from the top to the bottom), and one layer is overlaid with another layer like one piece of glass over another piece of glass. A layer consists of a random number of layout objects and object streams. The layout objects include statuses (typeface, character size, color, ROP, etc.), texts (including symbols), graphics (line, curve, closed area filled with specified color, gradient color, etc.), images (TIF, JPEG, BMP, JBIG, etc.), semantic information (title start, title end, new line, etc.), source file, script, plug-in, embedded object, bookmark, hyperlink, streaming media, binary data stream, etc. One or multiple layout objects can form an object stream, and an object stream can include a random number of sub-object streams.

The docbase, docset, document, page and layer may further include metadata (e.g., name, time of latest modification, etc., the type of the metadata can be set according to practical needs) and / or history. The document may further include navigation information, thread information and thumbnail image. And the thumbnail image also may be placed in the page or the layer. The docbase, docset, document, page, layer and object stream may also include digital signatures. The semantic information had better follows layout information to avoid data redundancy and facilitates the establishment of the relation between the semantic information and the layout. The docbase and document may include shared resources such as a font and image.

Further the universal document model may define one or multiple roles and grant certain privileges to the roles. The privileges are granted based on docbase, docset, document, page, layer, object stream and metadata etc.. Privileges define whether a role is authorized to read, write, copy or print any one or any combination of docbase, docset, document, page, layer, object stream and metadata etc..

The universal document model is beyond the conventional way of one document for one file. A docbase includes multiple docsets and a docset includes multiple documents. Fine-grained access and security control is applied to document contents in the docbase so that even a single text or rectangle can be accessed in the docbase while the prior document management system can only access as far as a file name.

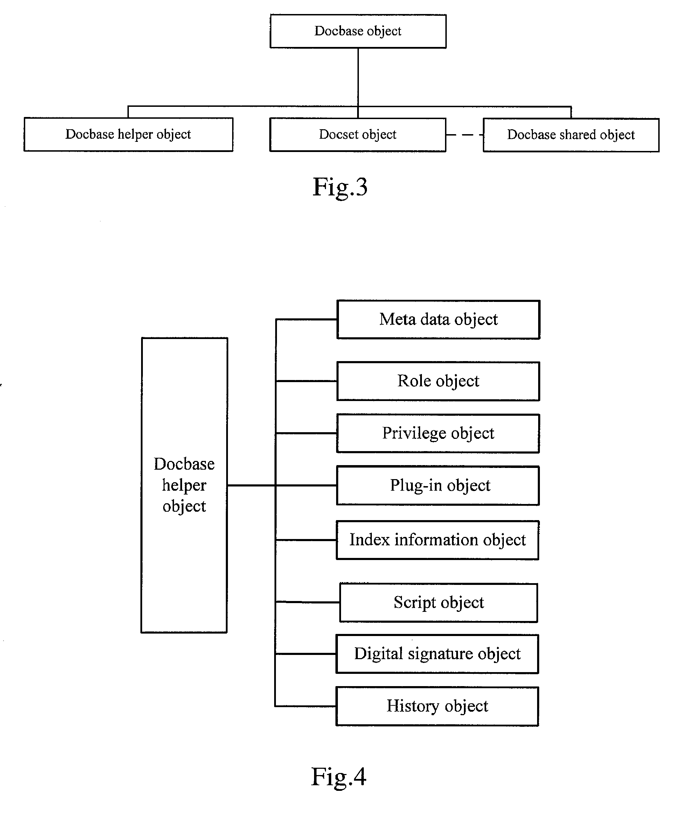

Figures from Fig. 3 to Fig. 9 are schematics illustrating the organization structures of various objects in the universal document model of Preferred Embodiment 1 of the present invention. The organization structures of the objects are tree structures and are divided into levels.

The document warehouse object consists of one or multiple docbase objects (not shown in the drawings).

As shown in Fig. 3, the docbase object includes one or multiple docset objects, a random number of docbase helper objects and a random number of docbase shared objects.

As shown in Fig. 4, the docbase helper object includes a metadata object, role object, privilege object, plug-in object, index information object, script object, digital signature object and history object etc. The docbase shared object includes an object that may be shared among different documents in the docbase, such as a font object and an image object.

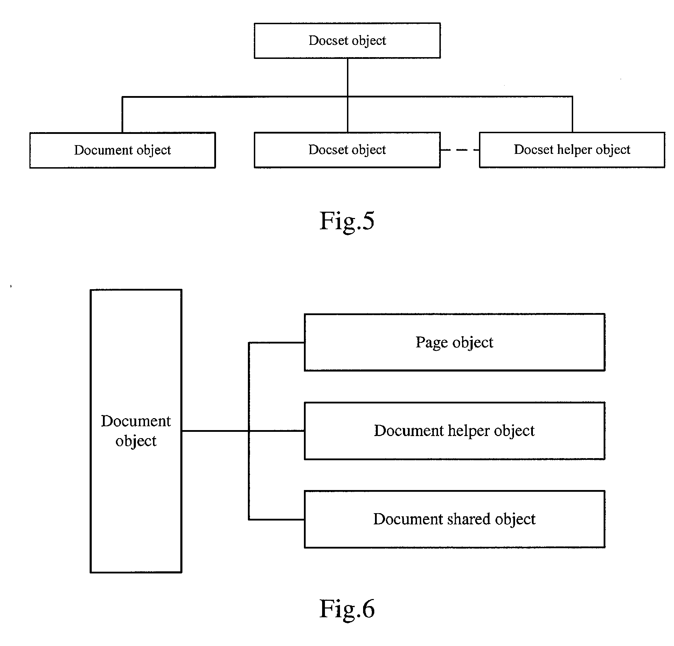

As shown in Fig.5, every docset object includes one or multiple document objects, a random number of docset objects and a random number of docset helper objects. The docset helper object includes a metadata object, digital signature object and history object. When the docset object includes multiple docset objects, the structure is similar to the structure of a folder including multiple folders in the Windows system.

As shown in Fig.6, every document object includes one or multiple page objects, a random number of document helper objects and a random number of document shared objects. The document helper object includes a metadata object, font object, navigation object, thread object, thumbnail image object, digital signature object and history object. The document shared object includes an object that may be shared by different pages in the document, such as an image object and a seal object.

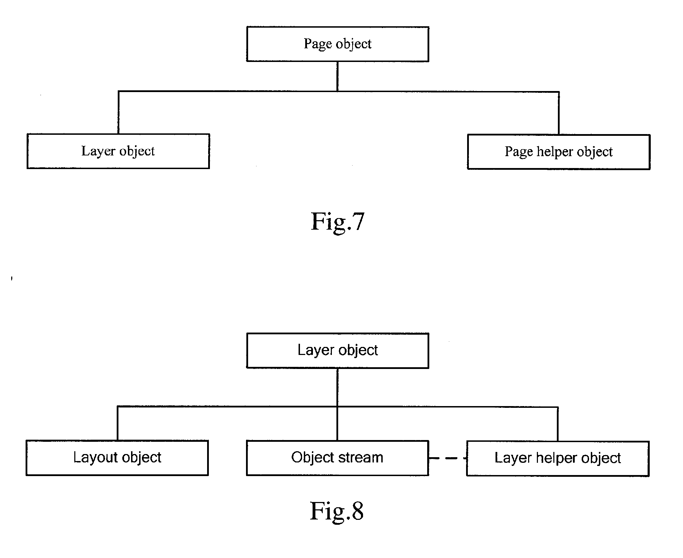

As shown in Fig.7, every page object includes one or multiple layer objects and a random number of page helper objects. The page helper object includes a metadata object, digital signature object and history object.

As shown in Fig.8, every layer object includes one or multiple layout objects, a random number of object streams and a random number of layer shared objects. The layer helper object includes a metadata object, digital signature object and history object. The object stream includes a random number of layout objects, a random number of object streams and optional digital signature objects. When the object stream includes multiple object streams, the structure is similar to the structure of a folder including multiple folders in the Windows system.

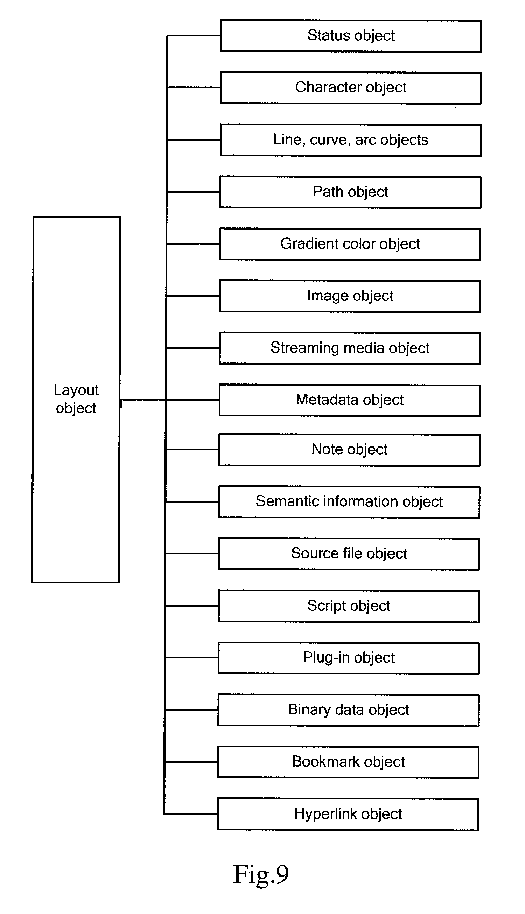

As shown in Fig.9, the layout object includes any one or any combination of a status object, text object, line object, curve object, arc object, path object, gradient color object, image object, streaming media object, metadata object, note object, semantic information object, source file object, script object, plug-in object, binary data stream object, bookmark object and hyperlink object.

Further the status object includes any one or any combination of a character set object, typeface object, character size object, text color object, raster operation object, background color object, line color object, fill color object, linetype object, line width object, line joint object, brush object, shadow object, shadow color object, rotate object, outline typeface object, stroke typeface object, transparent object and render object.

The universal document model can be enhanced or simplified based on the above description practically. If a simplified document model does not include a docset object, the docbase object shall include a document object directly. And if a simplified document model does not include a layer object, the page object shall include a layout object directly.

A skilled in the art can understand that a minimum universal document model includes only a document object, page object and layout object. And the layout object includes only a text object, line object and image object. The models between a full model and the minimum model are included in the equivalents of the preferred embodiments of the present invention.

Furthermore, a universal document security model needs to be defined to satisfy the document security of various practical needs. The universal document security model shall cover and excel the universal document security models employed by applications in the prior art and the definition of the universal document security model covers items as follows.

1. Role object

A role is defined in a docbase and a role object is created, and the role object is usually the sub-object of the docbase. When corresponding universal document model does not include a docbase object, the role shall be defined in a document, i.e., the role object shall be the sub-object of a document object and all docbases in the universal document security model shall be replaced with documents.

2. Grant an access privilege to a specified role

An access privilege can be granted to any role on any object (e.g. a docbase object, docset object, document object, page object, layer object, object stream object and layout object). If a privilege on an object is granted to a role, the privilege can be inherited by all direct or indirect sub-objects of the object.

Access privileges in the docbase management system may include any one or any combination of the following privileges on objects: read privilege, write privilege, re-license privilege (i.e., granting part of or all the privileges of itself to another role), and bereave privilege (i.e., deleting part of or all the privileges of another role). However, the privileges provided by the present invention are not limited to any one or any combinations of the privileges described above and more privileges can be defined, e.g., print prohibition privilege.

3. A role sign an object

A role can sign an object to obtain a signature. The signature covers the sub-objects of the object and objects referenced by the object.

4. Create a role

A key of a role used for login process shall be returned in response to an instruction of creating a role object, the key is usually a private key of the PKI key pair and should be kept carefully by the application. The key also can be a login password. Preferably, all applications are allowed to create a new role to which no privilege is granted. Certain privileges can be granted to the new role by existing roles with re-license privilege.

5. Login of role

When an application logs in as a role, the "challenge-response" mechanism can be employed, i.e., the docbase management system encrypts a random data block with the public key of the role and sends the cipher data to the application, the application decrypts the cipher data and returns the decrypted data to the docbase management system, if the data are correctly decrypted, it is determined that the application does have the private key of the role (the "challenge-response" authentication process may be repeated for several times for double-check). The "challenge-response" mechanism may also include processes as follows. The docbase management system sends a random data block to the application; the application encrypts the data with the private key and returns the cipher data to the docbase management system, and the docbase management system decrypts the cipher data with the public key, if the data is correctly decrypted, it is determined that the application does have the private key of the role. The "challenge-response" mechanism provides better security for the private key. When the key of the role is a login password, users of the application have to enter the correct login password.

In addition, the application may log in as multiple roles and the privileges granted to the application is the combination of the privileges of the roles.

6. A default role

A special default role can be created. When a default role is created, the corresponding docbase can be processed with the default role even when no other role logs in. Preferably, a docbase creates a default role with all possible privileges when the docbase is created.

Practically the universal document security model can be modified into an enhanced, simplified or combined process, and the modified universal document security model is included in the equivalents of the embodiments of the present invention.

Practical Implement of the Interface Layer

A unified interface standard for the interface layer can be defined based on the universal document model, universal security model and common document operations. And the interface standard is used for issuing instruction (s) used for performing operation(s) on object(s) in a universal document model instance. The instruction used for performing operation(s) on object(s) in the universal document model instance conforms with the interface standard so that different applications may issue standard instructions via the interface layer.

The application of the interface standard is explained hereinafter. The interface standard can be performed through processes as follows. The upper interface unit generates an instruction string according to a predetermined standard format, e.g., "<UOML_INSERT (OBJ=PAGE, PARENT=123.456.789, POS=3) /> ", and issues the instruction to the lower interface unit, then receives the operation result of the instruction or other feedback information from the docbase management system via the lower interface unit. Or the interface standard can be implemented as follows. The lower interface unit provides a number of interface functions with standard names and parameters, e.g., "BOOL UOI_InsertPage (UOI_Doc *pDoc, int nPage)", the upper interface unit invokes these standard functions and the action of invoking functions is equal to issuing standard instructions. Or the above two processes can be combined to implement the interface standard.

The interface standard applies an "operation action + object to be operated" approach so that the interface standard will be easy to study and understand and be more stable. For example, when 10 kinds of operations need to be performed on 20 kinds of objects, the standard can either define $20 \times 10 = 200$ instructions or define 20 kinds of objects and 10 kinds of actions. However, the latter definition method puts far less burden on human memory and it will be easy to add an object or action when the interface standard is extended in the future. The object to be operated is an object in the universal document model instance.

For example, the following 7 operation actions can be defined:

Open: create or open a docbase;

Close: close a session handle or a docbase;

Get: get an object list, object related attribute and data;

Set: set / modify object data;

Insert: insert a specified object or data;

Delete: delete a sub-object of an object;

Query: search for contents in document(s) according to a specified term, wherein the term may include accurate information or vague information, i.e., fuzzy search is supported.

The following objects can be defined: a docbase, docset, document, page, layer, object stream, text, image, graphic, path (a group of closed or open graphics in an order), source file, script, plug-in, audio, video, role, etc.

The objects to be defined may also include following status objects: background color, line color, fill color, line style, line width, ROP, brush, shadow, shadow color, character height, character width, rotate, transparent, render mode, etc.

When the interface standard applies the "operation action + object to be operated" approach, it can not be understood automatically that each combination of each object plus each action gives a meaningful operation instruction, some combinations are just meaningless.

The interface standard may also be defined by using a function approach which is not an "operation action + object to be operated" approach. For example, an interface function is defined for each operation on each object, and in such a case every operation instruction is issued to the docbase management system by the upper interface unit invoking corresponding interface function of the lower interface unit.

The interface standard may also encapsulate various object classes, e.g., a docbase class, and define an operation to be performed on the object as a method of the class.

Particularly, if an instruction of getting page bitmap is defined in the interface standard, it will be crucial to layout consistency and document interoperability.

By using the instruction of getting page bitmap, the application can get the page bitmap of a specified bitmap format of a specified page, i.e., the screen output of the page can be shown in a bitmap without rendering every layout object on the application' own. That means the application can directly get accurate page bitmap to display / print a document without parsing every layout object on every layer in every page one by one, rendering every object or displaying the rendering result of every object on page layout. When the application has to render the objects itself, in practical some applications may render the objects comparatively full and accurately while other applications rendering the objects partially or inaccurately, hence different applications may produce different screen display / print outputs for a same document, which impairs document interoperability among the applications. By generating page bitmap by the docbase management system, the keypoint to keeping consistent page layout is transferred from the application to the docbase management system, which makes it possible for different applications to produce identical page output for a same document. The docbase management system can provide such a function because: firstly, the docbase management system is a unified basic technical platform and is able to render various layout objects while it will be hard for an application to render all layout objects; secondly, different applications may cooperate with a same docbase management system to further guarantee consistent layouts in screen display / print outputs. To sum up, it is unlikely for different applications to produce identical output for a same document while it is possible for different docbase management systems to produce identical output for a same document, and a same docbase management system will definitely produces identical output for a same document. Therefore the task of generating page bitmaps is transferred from the application to the docbase management system, and it is an easy way to keep consistent page bitmap among different applications for a same document.

Furthermore, the instruction of getting page bitmap may target a specified area on a page, i.e., request to show only an area of a page. For example, when the page is larger than the screen, the whole page needs not to be shown, and while scrolling the page only the scrolled area needs to be re-painted. The instruction may also allow getting a page bitmap constituted of specified layers, especially a page bitmap constituted of a specified layer and all layers beneath the specified layer, such bitmaps will perfectly show history of the page, i.e., shows what the page looks like before the specified layer is added. If required, the instruction can specify the layers to be included in page bitmaps and the layers to be excluded from the page bitmaps.

An embodiment of the interface standard in the "operation action + object to be operated" approach is described hereafter. In the embodiment, the interface adopts the Unstructured Operation Markup Language (UOML) which provides an instruction in the Extensible Markup Language (XML). By generating a string conforming with UOML format and sending the string to the lower interface unit, the upper interface unit issues an operation instruction to the docbase management system. The docbase management system executes the instruction and the lower interface units generates another string in UOML format according to the operation resultin accordance with the instruction, the string is returned to the upper interface unit so that the application will learn the operation result in accordance with the instruction.

The result shall be expressed in UOML_RET and the definitions adopted in the UOML_RET include items as follows.

Attributes

SUCCESS: true indicating the successful operation and otherwise indicating the failing operation.

Sub-elements

ERR_INFO: optional, appearing only when the operation fails and used for describing corresponding error information.
Other sub-elements: defined based on different instructions, checking description of the instructions for reference.
UOML actions include items as follows.

1. UOML_OPEN create or open a docbase

   1.1 Attributes

      1.1.1 create: true indicating creating a new docbase and otherwise indicating opening an existing docbase.

   1.2 Sub-elements

      1.2.1 path: a docbase path. It can be the name of a file in a disk, or a URL, or a memory pointer, or a network path, or the logic name of a docbase, or another expression that points to a docbase.

   1.3 Return values

when the operation succeeds, a sub-element "handle" is added into the UOML_RET to record the handle.

2. UOML_CLOSE close

   2.1 Attributes: N/A

   2.2 Sub-elements

      2.2.1 handle: an object handle, a pointer index of the object denoted by a string.

      2.2.2 db_handle: a docbase handle, a pointer index of the docbase denoted by a string.

   2.3 Return values: N/A

3. UOML_GET Get

   3.1 Attributes
   usage: any one of "GetHandle" (get the handle of a specified object), "GetObj" (get the data of a specified object) and "GetPageBmp"(get a page bitmap).

   3.2 Sub-elements

      3.2.1 parent: the handle of the parent object of an object, used only when the attribute "usage" contains a value for "GetHandle".

      3.2.2 pos: a position number, used only when the attribute "usage" contains a value for "GetHandle".

      3.2.3 handle: the handle of a specified object, used only when the attribute "usage" contains a value for "GetObj".

3.2.4 page: the handle of the page to be displayed, used only when the attribute "usage" contains a value for "GetPageBmp".

3.2.5 input: describing the requirements for an input page, e.g., requiring to display the contents of a layer or multiple layers (the present logged role must have the privilege to access the layer(s) to be displayed), or specifying the size of the area to be displayed by specifying the clip area, used only when the attribute "usage" contains a value for "GetPageBmp".

3.2.6 output: describing the output of a page bitmap, used only when the attribute "usage" contains a value for "GetPageBmp".

3.3 Return values

3.3.1 when the attribute "usage" contains a value for "GetHandle" and the operation on the object succeeds, a sub-element "handle" is added into the UOML_RET to record the handle of the pos[th] sub-object of the parent object.

3.3.2 when the attribute "usage" contains a value for "GetObj" and the operation on the object succeeds, a sub-element "xobj" is added into the UOML_RET to record the xml expression of the data which includes the handle object.

3.3.3 when the attribute "usage" contains a value for "GetPageBmp" and the operation on the object succeeds, a location is specified in the "output" sub-element to export a page bitmap.

4. UOML_SET Set

4.1 Attributes: N/A

4.2 Sub-elements

4.2.1 handle: setting an object handle

4.2.2 xobj: description of an object;

4.3 Return values: N/A

5. UOML_INSERT Insert

5.1 Attributes: N/A

5.2 Sub-elements

5.2.1 parent: the handle of a parent object

5.2.2 xobj: description of an object

5.2.3 pos: the position of the inserted object

5.3 Return values
when the operation on an object succeeds, the object indicated by the "xobj" parameter shall be inserted into the parent object as the pos[th] sub-object of the parent object and a "handle" sub-element shall be included in the UOML_RET to indicate the handle of the newly inserted object.

6. UOML_DELETE delete

6.1 Attributes: N/A

6.2 Sub-elements

6.2.1 handle: the handle of the object to be deleted

6.3 Return values: N/A

7. UOML_QUERY search

7.1 Attributes: N/A

7.2 Sub-elements

7.2.1 handle: the handle of the docbase to be searched for

7.2.2 condition: search terms

7.3 Return values
when the operation succeeds, a "handle" sub-element shall be included in the UOML_RET to indicate the handle of the search results, a "number" sub-element shall indicate the number of the search results and UOML_GET can be used for getting each search result.

UOML objects include a docbase (UOML_DOCBASE), a docset (UOML_DOCSET), a document (UOML_DOC), a page (UOML_PAGE), a layer (UOML_LAYER), an object stream (UOML_OBJGROUP), a text (UOML_TEXT), an image (UOML_IMAGE), a line (UOML_LINE), a curve (UOML_BEIZER), an arc (UOML_ARC), a path (UOML_PATH), a source file (UOML_SRCFILE), a background color (UOML_BACKCOLOR), a foreground color (UOML_COLOR), a ROP(UOML_ROP), a character size (UOML_CHARSIZE) and a typeface (UOML_TYPEFACE).

The method for defining the objects is explained hereafter with reference to part of objects as follows.

1. UOML_DOC

1.1 Attributes: N/A

1.2 Sub-elements

1.2.1 metadata: metadata

1.2.2 pageset: pages

1.2.3 fontinfo: an embedded font

1.2.4 navigation: navigation information

1.2.5 thread: thread information

1.2.6 minipage: thumbnail image

1.2.7 signiture: a digital signature

1.2.8 log: history

1.2.9 shareobj: shared objects in the document

2. UOML_PAGE

2.1 Attributes

2.1.1 resolution: logical resolution

2.1.2 size: size of the page, including a width value and a height value

2.1.3 rotation: rotation angle

2.1.4 log: history

2.2 Sub-elements

2.2.1 gs: initial graphic statuses, including charstyle (character style), linestyle (line style), linecap (line cap style), linejoint (line joint style), linewidth (line width), fillrule (rule for filling), charspace (character space), linespace (line space), charroate (character rotation angle), charslant (character slant direction), charweight ( character weight), chardirect (character direction), textdirect (text direction), shadowwidth (shadow width), shadowdirect (shadow direction), shadowboderwidth (shadow border width), outlinewidth (outline width), outlineboderwidth (outline border width), linecolor (line color), fillcolor (color for filling), backcolor (background color), textcolor (text color), shadowcolor (shadow color), outlinecolor (outline color), matrix (transform matrix) and cliparea (clip area)

2.2.2 metadata: metadata
2.2.3 layerset: layers of the page
2.2.4 signiture: digital signatures
2.2.5 log: history

3. UOML_TEXT

3.1 Attributes:

3.1.1 encoding: encoding pattern of text

3.2 Sub-elements

3.2.1 textdata:contents of the text
3.2.2 charspacinglist: a list of the spacing values for characters with irregular space
3.2.3 startpos: the starting position

4. UOML_CHARSIZE

4.1 Attributes

4.1.1 width: character width
4.1.2 height: character height

4.2 Sub-elements: N/A

5. UOML_LINE

5.1 Attributes

5.1.1 linestyle: line style
5.1.2 linecap: line cap style

5.2 Sub-elements

5.2.1 startpoint: the coordinate of the starting point of the line
5.2.2 endpoint: the coordinate of the ending point of the line

6. UOML_BEIZER

6.1 Attributes

6.1.1 linestyle: line style

6.2 Sub-elements

6.2.1 startpoint: the coordinate of the starting point of a Bessel curve
6.2.2 control1_point: first control point of the Bessel curve
6.2.3 control2_point: second control point of the Bessel curve
6.2.4 endpoint: the coordinate of the ending point of the Bessel curve

7. UOML_ARC

7.1 Attributes

7.1.1 clockwise: the direction of the arc

7.2 Sub-elements

7.2.1 startpoint: the coordinate of the starting point of the arc
7.2.2 endpoint: the coordinate of the ending point of the arc
7.2.3 center: the coordinate of the center of the arc

8. UOML_COLOR

8.1 Attributes

8.1.1 type: color type, i.e., RGB or CMYK

8.2 Sub-elements
RGB mode

8.2.1 red: red

8.2.2 green: green

8.2.3 blue: blue

8.2.4 alpha: transparency
CMYK mode

8.2.5 cyan: cyan

8.2.6 magenta: magenta

8.2.7 yellow: yellow

8.2.8 black_ink: black

The definitions of the remaining UOML objects can be deduced from the above description. When the application initiates an operation in the docbase management system, corresponding UOML instruction will be generated based on corresponding UOML action and UOML object according to the XML grammar; and the application issues the operation instruction to the docbase management system by issuing the UOML instruction to the docbase management system.
For example, the operation of creating a docbase can be initiated by the executing instruction:

```
<UOML_OPEN create="true">
    <path val="f:\\data\\docbase1.sep"/>
</UOML_OPEN>
```

And the operation of creating a docset can be initiated by the executing instruction:

```
<UOML_INSERT >
```

```
<parent val= "123.456.789"/>
<pos val="1"/>
<xobj>
     <docset/>
</xobj>
</UOML_INSERT>
```

It should be noted that, though UOML is defined with XML, prefix expressions of standard XML format such as "<?xml version="1.0" encoding="UTF-8"?>" and "xmlns:xsi= "http://www.w3.org/2001/XMLSchema-instance"" are omitted to simplify the instructions, however, those familiar with XML may add the expressions at will.

The instructions may also be defined in a language other than the XML, e.g., the instructions can be constructed like PostScript, and in such case the above instruction examples will be changed into:

```
1, "f:\\data\\docbase1.sep", /Open
/docset, 1, "123.456.789", /Insert
```

Instructions in other string formats may also be defined according to the same theory; the instructions may even be defined in a non-text binary format.

The instructions may also be defined in an approach other than the "action + object" approach. For example, every operation on every object can be expressed in an instruction, e.g., "UOML_INSERT_DOCSET" indicates inserting a docset and "UOML_INSERT_PAGE" indicates inserting a page, and the definition details are as follows:

UOML_INSERT_DOCSET: used for inserting a docset in a docbase

Attributes: N/A

Sub-elements

parent: the handle of the docbase

pos: the position of the docset to be inserted

Return value: when the operation succeeds, a sub-element "handle" shall be included in the UOML_RET to indicate the handle of the newly inserted docset

Therefore the instruction shall appear like:

```
<UOML_INSERT_DOCSET >
    <parent val="123.456.789"/>
    <pos val="1"/>
</UOML_INSERT_DOCSET >
```

However, such approach for defining instructions is inconvenient since every legal operation on every object needs an independent instruction.

The interface standard can also apply an approach of invoking a function, i.e., the upper interface unit issues an operation instruction to the docbase management system by invoking an interface function of the lower interface unit. The following embodiment of the interface, referred to as Unstructured Operation Interface (UOI), employs C++ language.

1. Define a UOI return value structure:

```
struct UOI_Ret {
    BOOL m_bSuccess; // whether the operation succeeds.
    CString m_ErrInfo; // when the operation fails, show error information.
};
```

Then, the basic classes of all UOI objects are defined.

```
class UOI_Object {
public:
    enum Type {
        TYPE_DOCBASE,
        TYPE_DOCSET,
        TYPE_DOC,
TYPE_PAGE,
TYPE_LAYER,
TYPE_TEXT,
TYPE_CHARSIZE,
        .....//the definitions of the types of other objects defined in the universal
document model are similar to the definitions described above and will not be explained
further.
    };
    Type m_Type;
    UOI_Object();
 virtual ~ UOI_Object();
 static UOI_Object *Create(Type objType); // create corresponding object based on a
specified type.
};
```

2. Define UOI functions as follows in correspondence with the UOML actions in the embodiment of the "operation action + object to be operated" approach..

Open or create a docbase, and return the handle of the docbase in the "pHandle" if the operation succeeds:

UOI_RET UOI_Open (char *path, BOOL bCreate, HANDLE *pHandle).

Close the handle in the db_handle docbase, and if the handle value is NULL, the whole docbase will be closed:

UOI_RET UOI_Close (HANDLE handle, HANDLE db_handle).

Get the handle of a specified sub-object:

UOI_RET UOI_GetHandle (HANDLE hParent, int nPos, HANDLE *pHandle).

Get the type of the object pointed to by the handle:

UOI_RET UOI_GetObjType (HANDLE handle, UOI_Object ::Type *pType).

Get the data of the object pointed to by the handle:

UOI_RET UOI_GetObj (HANDLE handle, UOI_Object *pObj).

Get a page bitmap:

UOI_RET UOI_GetPageBmp (HANDLE hPage, RECT rect, void *pBuf).

Set an object:

UOI_RET UOI_SetObj (HANDLE handle, UOI_Object *pObj).

Insert an object:

UOI_RET UOI_Insert (HANDLE hParent, int nPos, UOI_Object *pObj, HANDLE *pHandle = NULL).

Delete an object:

UOI_RET UOI_Delete (HANDLE handle).

Search, and the number of search results is returned in "pResultCount" while the handles of the search results are returned in "phResult":

UOI_RET UOI_Query (HANDLE hDocbase, const char *strCondition, HANDLE *phResult, int *pResultCount).

3. Define varieties of UOI objects. The following examples include UOI_Doc, UOI_Text and UOML_CharSize.

class UOI_Doc : public UOI_Object { public: UOI_MetaData m_MetaData; int m_nPages; UOI_Page **m_pPages; int m_nFonts; UOI_Font **m_pFonts; UOI_Navigationm_Navigation ; UOI_Thread m_Thread; UOI_MiniPage *m_pMiniPages ; UOI_Signature m_Signature ; int m_nShared; UOI_Obj *m_pShared; UOI_Doc(); virtual ~UOI_Doc () ; };

```
class UOI_Text: public UOI_Object {
public:
    enum Encoding {
        ENCODE_ASCII,
        ENCODE_GB13000,
        ENCODE_UNICODE,
        .....
    };
    Encoding m_Encoding;
    char *m_pText ;
    Point m_Start ;
    int *m_CharSpace ;

UOI_Text();
virtual ~ UOI_Text();
};

class UOI_CharSize : public UOI_Object {
public:
    int m_Width ;
    int m_Height ;

    UOI_CharSize();
    virtual ~UOI_CharSize();
};
```

The way of applying the UOI is explained with reference to the following example.
First a docbase shall be created:

ret = UOI_Open("f:\\data\\docbase1.sep", TRUE, &hDocBase).

4. Construct a function used for creating a new object.

HANDLE InsertNewObj (HANDLE hParent, int nPos, UOI_Object ::Type type)

```
{
UOI_Ret ret;
HADNLE handle;
UOI_Obj *pNewObj = UOI_Obj::Create(type);
if (pNewObj == NULL)
    return NULL;
ret = UOI_Insert(hParent, nPos, pNewObj, &handle) ;
delete pNewObj ;
return ret.m_bSuccess ? handle : NULL;
}
```

5. Construct a function used for getting an object directly.

UOI_Obj *GetObj(HANDLE handle)

```
{
UOI_Ret ret;
UOI_Object ::Type type;
UOI_Obj *pObj;
ret = UOI_GetObjType(handle, &type);
if ( !ret. m_bSuccess )
    return NULL;
pObj = UOI_Obj::Create(type);
if (pObj == NULL)
    return NULL;
ret = UOI_GetObj(handle, pObj);
if ( !ret. m_bSuccess ) {
    delete pObj;
    return NULL;
}
return pObj;
}
```

The interface standard may also be defined by using the function approach which is not a "action + object" approach, e.g., an interface function is defined for every operation on every object, and in such a case an operation instruction of inserting a docset is issued to the docbase management system by the way that the upper interface unit invokes corresponding interface function of the lower interface unit, and the operation instruction issued to the docbase management system is as follows:

　　UOI_InsertDocset(pDocbase, 0).

The interface standard may also encapsulate varieties of object classes, e.g., a docbase class, and define an operation to be performed on the object as a method of the class. e.g.:

```
class UOI_DocBase : public UOI_Obj
{
public:
/*!
 * \brief Create a docbase
 * \param szPath: full path of the docbase
 * \param bOverride: whether the original file should be overwritten
 * \return UOI_DocBase the object
 */
    BOOL Create(const char *szPath, bool bOverride = false);
/*!
 * \brief open a docbase
 * \param szPath: full path of the docbase
 * \return UOI_DocBase the object
 */
    BOOL Open(const char *szPath);
/*!
 * \brief Close a docbase
  * \param N/A
  * \return N/A
  */
    void Close();
  /*!
 * \brief Get a role list
 * \param N/A
 * \return UOI_RoleList the object
 * \sa UOI_RoleList
 */
```

```
    UOI_RoleList GetRoleList();
/*!
 * \brief save a docbase
 * \param szPath: save the full path of the docbase
 * \return N/A
 */
    void Save(char *szPath = 0);
/*!
 * \brief insert a docset
 * \param nPos: the position at which the docset shall be inserted
 * \return UOI_DocSet the object
 * \sa UOI_DocSet
 */
    UOI_DocSet InsertDocSet(int nPos);
/*!
 * \brief get the docset corresponding to a specified index
 * \param nIndex: index number of the document list
 * \return UOI_DocSet the object
 * \sa UOI_DocSet
 */
    UOI_DocSet GetDocSet(int nIndex);
/*!
 * \brief total number of the got docsets
  * \param N/A
  * \return the number of docsets
  */
    int GetDocSetCount();
/*!
 * \brief set the name of the docbase
 * \param nLen: length of the docbase name
 * \param szName: docbase name
 * \return N/A
 */
    void SetName(int nLen, const char* szName);
/*!
 * \brief get the length of the docbase name
 * \param N/A
 * \return length
 */
    int GetNameLen();
/*!
 * \brief get the docbase name
 * \param N/A
 * \return docbase name
 */
    const char* GetName();
/*!
 * \brief get the length of the docbase id
 * \param N/A
 * \return length
 */
    int GetIDLen();
/*!
 * \brief get the docbase id
 * \param N/A
 * \return id
 */

    const char* GetID();


    //! Constructor function
    UOI_DocBase();
    //! Destructor function
```

```
    virtual ~UOI_DocBase();


};


class UOI_Text : public UOI_Obj
{
public:
    //! Constructor function
    UOI_Text();
    //! Destructor function
    virtual ~UOI_Text();
    //! Enumeration type indicating the text encoding pattern
    enum UOI_TextEncoding
    {
        CHARSET_ASCII,
        CHARSET_GB13000,
        CHARSET_UNICODE,
        };


    //! Get the encoding pattern of the text
    UOI_TextEncoding GetEncoding();
    //! Set the encoding pattern of the text
    void SetEncoding(UOI_TextEncoding nEncoding );
    //! Get the text data
    const char * GetTextData();
    //! Get the length of the text data
    int GetTextDataLen();
    //! Set the text data
    /*!
    \param pData Text data
    \param nLen Data length
    */
    void SetTextData(const char * pData, int nLen);
    //! Get the starting point
    Point GetStartPoint();
    //! Set the starting point
    void SetStartPoint(Point startPoint);
    //! Get the size of a character spacing list
    int GetCharSpacingCount();
    //! Get the character spacing of the position specified in the character spacing list
    float GetCharSpacing(int nIndex);
    //! Set the size of character spacing list
    bool SetCharSpacingCount(int nLen);
    //! Set character spacing
    bool SetCharSpacing (int nIndex, float charSpace );
    //! Get the border of the text
    UOI_Rect GetExtentArea() ;
};


class UOI_RoleList : public UOI_Obj
{
public:
    //! Get the role number in the list
    int GetRoleCount();
    //! Get a role according to a specified index
    UOI_Role *GetRole(int nIndex);
    //! Create a role
    /*!
    \param pPrivKey Private key cache
     \param pnKeyLen Return the length of the actual private key
     \return the newly created role
     */
     UOI_Role AddRole(unsigned char *pPrivKey, int *pnKeyLen);
```

```
    //! Constructor function
    UOI_RoleList();
    //! Destructor function
    virtual ~UOI_RoleList();
};


class UOI_Role : public UOI_Obj
{
public:
    //! Constructor function
    UOI_Role();
    //! Destructor function
    virtual ~UOI_Role();

    //! Get a role ID
    int GetRoleID();
    //! Set a Role ID
    /*!
    \param nID role ID
    */
    void SetRoIeID(int nID);
    //! Get a role name
    const char * GetRoleName();
    //! Set a role name
    /*!
    \param szName Role name
    */
    void SetRoleName(const char *szName);
};
class UOI_PrivList : public UOI_Obj // privilege list
{
public:
    //! Get the privilege of a specified role
    UOI_RolePriv *GetRolePriv (UOI_Role *pRole);
    //! Create a privilege item for a role
    UOI_RolePriv *pPriv AddRole ();
    //! Get the number of the privileges of a role in the list
    int GetRolePrivCount();
    //! Get the privilege item of the role according to an index value
    UOI_RolePriv *GetRolePriv (int nIndex);
    //! Constructor function
    UOI_PrivList();
    //! Destructor function
    virtual ~UOI_PrivList();
};


class UOI_RolePriv : public UOI_Obj // corresponding to all privileges of a role
{
public:
    //! Get a role
    UOI_Role *GetRole();
 //! Set privileges on an object; when the privileges exceed the present privileges of
the role on the object, the action constitutes granting the privileges, and when the
privileges are narrower than the present privileges of the role on the object, the action
constitutes bereaving of the privileges. The currently logged role must have the
corresponding re-license privilege or bereave privilege.
bool SetPriv(UOI_Obj *pObj, UOI_Priv *pPriv);
//! Get the number of granted privileges
 int GetPrivCount();
    //! Get the object on which the privilege corresponding to the index value is
granted
    UOI_Obj *GetObj(int nIndex);
    //! Get the privilege set by the privileges corresponding to the index value
```

```
    UOI_Priv *GetPriv(int nIndex);
//! Get the privilege on an object
UOI_Priv *GetPriv(UOI_Obj *pObj);
//! Constructor function
    UOI_RolePriv ();
    //! Destructor function
    virtual ~UOI_RolePriv ();
};


class UOI_Priv : public UOI_Obj
{
public:
enum PrivType { // definition of privilege types
    PRIV_READ, // read privilege
    PRIV_WRITE, // write privilege
    PRIV_RELICENSE, // re-license privilege
    PRIV_BEREAVE, //bereave privilege
    PRIV_PRINT, // print privilege
    Definitions of other privileges
}
    //! Whether there is a corresponding privilege being granted
    bool GetPriv(PrivType privType);
    //! Set the corresponding privilege
    void SetPriv(PrivType privType, bool bPriv);
//! Constructor function
    UOI_Priv ();
    //! Destructor function
    virtual ~UOI_Priv ();
};


class UOI_SignList: public UOI_Obj
{
public:
    //! Constructor function
    UOI_SignList();
    //! Destructor function
    virtual ~UOI_SignList();

    //! Add a new node signature and return the index value thereof
    int AddSign(UOI_Sign *pSign);
    //! Get a node signature according to a specified index value
    UOI_Sign GetSign(int index);
    //! Delete a node signature according to a specified index value
    void DelSign(int index);
    //! Get the number of the node signatures in the list
    int GetSignCount();
 };

 class UOI_Sign : public UOI_Obj
 {
 public:
    //! Constructor function
    UOI_Sign();
    //! Destructor function
    virtual ~UOI_Sign();

    //! Perform the action of signing
    /*!
    \param pDepList the dependency list of the signature
    \param pRole the role that signs
    \param pObj the object on which the signature is created
    */
```

```
    void Sign(UOI_SignDepList pDepList, UOI_Role pRole , UOI_Obj pObj);
    //! Verify the signature
    bool Verify();
    //! Get the dependency list of the signature
     UOI_SignDepList GetDepList();
};


class UOI_SignDepList : public UOI_Obj
{
public:
    //! Constructor function
    UOI_SignDepList();
    //! Destructor function
    virtual ~UOI_SignDepList();


    //! Insert a dependency item
    void InsertSignDep(UOI_Sign *pSign);
    //! The number of the dependency item got
    int GetDepSignCount();
    //! Get a dependency item according to a specified index
    UOI_Sign *GetDepSign(int nIndex);
};
```

The upper interface unit issues an operation instruction of inserting a docset to the docbase management system by invoking a function of the lower interface unit in following method: pDocBase.InsertDocset(0).

Different interface standards can be designed in the same way as described above for applications developed based on Java, C#, VB, Delphi or other programming languages.

As long as an interface standard includes no feature associated with a certain operation system (e.g., WINDOWS, UNIX / LINUX, MAC OS, SYMBIAN) or hardware platform (e.g., x86CPU, MIPS, POWER PC), the interface standard can be applied cross-platform so that different applications and docbase management systems on different platforms can use a same interface standard, even an application running on one platform may invoke a docbase management system running on another platform to perform an operation. For example, when the application is installed on a client terminal in a PC using Windows OS and the docbase management system is installed on a server in a mainframe using Linux OS, the application can still invoke the docbase management system on the server to process documents just like invoking a docbase management system on the client terminal.

When the interface standard includes no feature associated with a certain program language, the interface standard is further free from dependency on the program language. It can be seen the instruction string facilitates the creation of a more universal interface standard irrelevant to any platform or program language, especially when the instruction string is in XML, because all platforms and program languages in the prior art have easy-to-get XML generating and parsing tools, therefore the interface standard will perfectly fit all platforms and be independent of program languages, and the interface standard will make it more convenient for engineers to develop an upper interface unit and lower interface unit.

More interface standards can be developed based on the same way of defining the interface standard described above.

More operation instructions can be added into the interface standard based on the embodiments described above in the way of constructing instructions as described above, and the operation instructions can also be simplified based on the embodiments, especially when the universal document model is simplified, the operation instructions shall be simplified accordingly. The interface standard shall include at minimum the operation instructions for creating a document, creating a page and creating a layout object.

The working process of the document processing system in accordance with the present invention is explained with reference to Fig. 1 again.

The application may include any software of an upper interface unit conforming with the interface standard, e.g., the Office software, a contents management application, a resource collection application, etc. The application issues an instruction to the docbase management system when the application needs to process a document, and the docbase management system performs corresponding operation according to the instruction.

The docbase management system may store and organize the data of the docbase in any form, e.g., the docbase management system may save all documents in a docbase in one file on a disk, or create one file on the disk for one document and organize the documents by using the file system functions of the operating system, or create one file on the disk for one page, or allocate room on disk and manage the disk tracks and sectors without referencing to the operating system. The docbase data can be saved in a binary format, in XML, or in binary XML. The page description language (used for defining objects including texts, graphics and images in a page) may adopt PostScript, or PDF, or SPD, or a customized language. To sum up, any implement method that achieves the interface standard functions defined herein is acceptable.

For example, the docbase data can be described in XML and when the universal document model is hierarchical, an XML tree can be built accordingly. An operation of inserting adds a node in the XML tree and an operation of deleting deletes a node in the XML tree, an operation of setting sets the attributes of corresponding node and an operation of getting gets the attributes of corresponding node and returns the attribute information to the application, and an operation of querying traverses all related nodes. A further description of an embodiment is given as follows.

1. XML is used for describing every object; therefore an XML tree is created for each object. Some objects show simple attributes and the XML trees corresponding to the objects will have only the root node; some objects show complicate attributes and the XML trees corresponding to the objects will have root node and sub-nodes. The description of the XML trees can be created with reference to the XML definitions of the operation objects given in the fore-going description.

2. When a new docbase is created, a new XML file which root node is the docbase object shall be created.

3. When a new object (e.g., a text object) is inserted into the docbase, the XML tree corresponding to the new object shall be inserted under corresponding parent node (e.g., a layer). Therefore every object in the docbase corresponds to a node in the XML tree whose root node is the docbase.

4. When an object is deleted, the node corresponding to the object and the sub-nodes thereof shall be deleted. The deletion starts from a leaf node in a tree traversal from the bottom to the top.

5.When an attribute of an object is set, the attribute of the node corresponding to the object shall be set to the same value. If the attribute is expressed as an attribute of a sub-node, the attribute of the corresponding sub-node shall be set to the same value.

6. In the process of getting an attribute of an object, the node corresponding to the object shall be accessed and the attribute of the object is got according to the corresponding attribute and sub-nodes of the node.

7. In the process of getting the handle of an object, the XML path of the node corresponding to the object shall be returned.

8. When an object (e.g., a page) is copied to a specified position, the whole subtree starting from the node corresponding to the object shall be copied to a position right under the parent node corresponding to the specified position (e.g., a document). When the object is copied to another docbase, the object referenced to by the subtree (e.g., an embedded font) shall also be copied.

9. In the process of performing an instruction of getting page bitmap, a blank bitmap in a specified bitmap format is created firstly in the same size of the specified area, then all layout objects of the specified page are traversed, every layout object in the specified area (including the objects which have only parts in the area) is rendered and displayed in the blank bitmap. The process is complicated and can be performed by those skilled in the art, however, the process is still covered by the RIP (Raster Image Processor) technology in the prior art and will not be described herein.

10. When a role object is created, a random PKI key pair (e.g., 512-digits RSA keys) is generated, the public key of the PKI key pair is saved in the role object and the private key is returned to the application.

11. When the application logs in, a random data block (e.g., 128 bytes) is generated, and encrypted with the public key of the corresponding role object to obtain the cipher data, and the cipher data is sent to the application, the application decrypts the cipher data block and the decrypted data block shall be authenticated, if the data block is correctly decrypted, the application is proved to possess the private key of the role and will be allowed to log in. Such authentication process may be repeated for three times and the application is allowed to log in only when the application passes all three authentication processes.

12. When a target object is signed to obtain a signature, the subtree starting from the node corresponding to the object shall be signed to obtain the signature. The subtree shall be regularized first so that the signature will be free from being affected by physical storage variation, i.e., by logically equivalent alterations (e.g., changes of pointer caused by the changes of storage position). The regularization method includes:

traversing all nodes in the subtree whose root node is the target object (i.e., target object and the sub-object thereof) in a depth-fist traversal, regularizing each node in the order of the traversal and joining the regularization result of each node.

The regularization of a node in the subtree includes: calculating the HASH value of the sub-node number of the node, calculating the HASH values of the node type and node attributes, joining the obtained HASH values of the node type and node attributes right behind the HASH value of the sub-node number according to the predetermined order, and calculating the HASH value of the join result to obtain the regularization result of the node. When an object which referenced to by a node in the subtree needs to be signed to obtain the signature, the object shall be regarded as a sub-node of the node and be regularized in the method described above.

After the regularization, the HASH value of the regularization can be generated and the signature can be obtained by encrypting the HASH value with the private key of the role according to the techniques in the prior art which will not be described herein.

In the regularization process, the regularization of a node in the subtree may also include: joining the sub-node number of the node, the node type and node attributes in an order with separators in between, calculating the HASH value of the join result to obtain the regularization result of the node. Or the regularization of a node in the subtree may include: joining the sub-node number length, the node type length and the node attribute lengths in an order with separators in between, further joining the already joint lengths with the sub-node number, node type and node attributes, then the regularization result of the node is obtained. To sum up, the step of regularizing a node in the subtree may include the following step: joining original values or transformed values (e.g., HASH values, compressed values) of: the sub-node number, node type and node attributes, and the lengths of the sub-node number / node type / node attributes (optional), in a predetermined order directly or with separators in between.

The predetermined order includes any predetermined order of arranging the sub-node number length, node type length, node attribute lengths, sub-node number, node type and node attributes.

In addition, either depth-first traversal or width-first traversal is applied in the traversal of the nodes in the subtree. It is easy to illustrate various modifications of the technical scheme of the present invention, e.g., the scheme may include joining the sub-node number of every node with separators in between in the order of depth-first traversal and the joining with the regularization results of other data of every node. Any method that arranges the sub-node numbers, node types and node attributes of all nodes in the subtree in a predetermined order constitutes a modification of this embodiment.

13. When setting a privilege on an object, the simplest method includes: recording the privileges of every role on the object (including the sub-objects thereof) and comparing the privileges of the role when the role access the object, if an operation within the privileges, the operation shall be accepted, otherwise error information shall be returned. A preferred method applied to the present invention includes: encrypting corresponding data and controlling a privilege with a key, when a role cannot present the correct key, the role does not have corresponding privilege. This preferred method provides better anti-attack performance. The detailed description of the steps of the preferred method is given below.

a) A PKI key pair is generated for a protected data region (usually a subtree corresponding to an object and the sub-objects thereof), and the data region is encrypted with the encryption key of the PKI key pair.

b) When a role is granted read privilege, the decryption key of the PKI key pair is passed to the role and the role may decrypt the data region with the decryption key in order to read the data correctly.

c) When a role is granted write privilege, the encryption key of the PKI key pair is passed to the role and the role may encrypt modified data with the encryption key in order to write data into the data region correctly.

d) Since the encryption / decryption efficiency of the PKI keys is low, a symmetric key may be used for encrypting the data region and the encryption key further encrypts the symmetric key while the decryption key may decrypts the cipher data of the symmetric key to retrieve the correct symmetric key. The encryption key may be further used for signing the data region to obtain a digital signature to prevent a role with the read privilege only from modifying the data when the role is given the symmetric key. In such a case a role with the write privilege signs the data region to obtain a new signature every time when the data region is modified; therefore the data will not be modified by any role without the write privilege.

e) When a role is given the encryption key or decryption key, the encryption key or decryption key may be saved after being encrypted by the public key of the role, so that the encryption key or decryption key can only be retrieved with the private key of the role.

In this embodiment, the system and method for document data security control provided by the present invention are applied to the docbase management system described in the fore-going description; however, the present invention can also be applied to any system other than the docbase management system.

The system for document data security control provided by the present invention is explained herein first.

The system for document data security control of the present invention includes a role management unit, a security session channel unit, an identity authentication unit, an access control unit and a signature unit. The role management unit is used for managing at least one role and has the functions of creating a role, granting a privilege to a role and bereaving a role of a privilege. A role can be identified with at least one unique ID and one unique PKI key pair, however, the role object saves the ID and the public key of the role, the private key of the role is given to the application. The role can also be identified with a unique ID and a login password, and in such a case the role object saves the ID and the cipher data of the login password. The ID of a role can be any number or string as long as different roles are given different IDs. The PKI algorithm can be either ECC algorithm or RSA algorithm.

A number of roles are defined in a docbase and the role objects are sub-objects of the docbase. When corresponding universal document model does not include a docbase object, the roles shall be defined in documents, i.e., the role objects shall be the sub-objects of document objects and all docbases in the document data security control system shall be replaced with documents.

Preferably, all applications are allowed to create a new role to which no privilege is granted. Certain privileges can be granted to the new role by existing roles with re-license privilege.

The key returned in response to an instruction of creating a role object shall be used for login process, the key should be kept carefully by the application, and the key is usually a private key of a PKI key pair or a login password.

A special default role can be created in the system for document data security control. When a default role is created, corresponding docbase can be processed with the default role even when no other roles log in. Preferably, a docbase automatically creates a default role with all possible privileges when the docbase is created.

The process performed by the application from logging in by using a role (or roles), performing a number of operations to logging out is regarded as a session. A session can be identified with session identification and a logged role list etc.. The session can be performed on a security session channel in the security session channel unit which keeps at least a session key for encrypting the data transmitted on the security session channel. The session key may be an asymmetric key, or a commonly used symmetric key with more efficiency.

The identity authentication unit is used for authenticating the identity of a role when the role logs in. The identity authentication is role oriented and any role except the default role may log in only after presenting the key of the role. When a role wants to log in and the key of the role is a PKI key, the identity authentication unit retrieves the public key of the role from the role object according to the role ID and authenticates the identity of the role by using the "challenge-response" mechanism described in the fore-going description; when the key of the role is a login password, the identity authentication unit retrieves the login password from the role object according to the role ID and draws comparison.

The application may log in as multiple roles at the same time and the privileges granted to the application shall then be the combination of the privileges of the roles.

The access control unit is used for setting an access control privilege for document data, and a role can only access document data according to the access control privilege granted to the role. The privilege data can be managed by the access control unit so that some roles may acquire the privilege of other role and some roles may not. A role can modify privileges of other roles in normal re-license or bereave process only when the role is granted re-license privilege or bereave privilege; directly writing data into the privilege data is not allowed.

An access privilege for any role on any object (a docbase, docset, document, page, layer, object stream, layout object) can be set up, and if a privilege on an object is granted to a role, the privilege can be inherited by all sub-objects of the object.

Access privileges include any one or any combination of the following privileges: read privilege (whether a role may read data), write privilege (whether a role may write into data), re-license privilege (whether a role may re-license, i.e., grant part of or all the privileges of the role to another role), bereave privilege (whether a role may bereave of privilege, i.e., delete a part or all of the privileges of another role) and print privilege (whether a role may print data), and the present invention does not limit the privileges. Preferably, a docbase creates a default role with all possible privileges when the docbase is created so that the creator of the docbase has all privileges on the docbase.

The signature unit is used for signing any logical data specified among the document data to obtain a signature in the system for document data security control. The signature unit can sign a role with corresponding private key to obtain a signature, and verify the validity of the signature with the public key.

Every object can be signed by the role to obtain a signature. The signature covers the sub-objects of the signed object and the objects referenced.

The method for document data security control is further explained herein with reference to the system for security control described above.

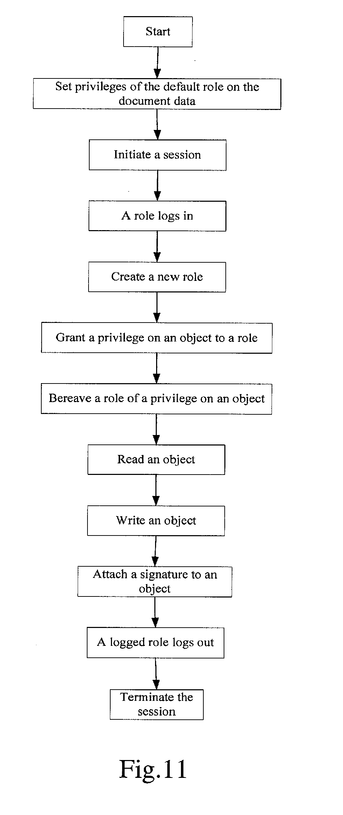

As shown in Figure 11, the method for document data security control of the present invention includes the following steps:

1. When a docbase is created, the role management unit automatically grants all possible privileges on the docbase, including read privilege, write privilege, re-license privilege and bereave privilege on all objects, to the default role of the docbase.

2. The security session channel unit sets up a security session channel between the application and the docbase management system and initiates a session.

a) Determine whether the session has been successfully initiated according to session identification; if the session has been successfully initiated, the security session channel setup process shall end, otherwise the security session channel setup process shall proceed.

b) Either the application or the docbase management system generates a random PKI key pair.

c) The party which generates the random PKI key pair sends the public key of the PKI key pair to the other party.

d) The other party generates a random symmetric key as the session key, encrypts the session key with the public key and sends the cipher data of the session key to the party which generates the random PKI key pair.

e) The party which generates the random PKI key pair decrypts the cipher data of the session key with the private key of the PKI key pair.

f) Set up the session identification.

g) Set the logged role list as the default role.

3. Role logs in

a) The application provides the ID of a role that shall log in and a docbase in which the role shall log.

b) The identity authentication unit checks the logged role list of the session, if the role (including the default role) has logged in, this step shall end, otherwise this step shall proceed.

c) when the key of the role is a PKI key, the identity authentication unit retrieves the public key of the role from the role object; when the key of the role is a login password, proceed Step h) directly.

d) The identity authentication unit generates a random data block and encrypts the data block with the public key of the role.

e) The identity authentication unit sends the cipher data of the data block to the application.

f) The application decrypts the cipher data of the data block with the private key of the role and sends the decrypted data block back to the identity authentication unit.

g) The identity authentication unit checks whether the returned data block is correct, and if the data block is incorrect, the role will fail to log in, otherwise directly proceed Step i).

h) The application provides a login password and the identity authentication unit compares the login password saved in the role object with the login password provided by the application, if the two passwords are identical, the login process shall proceed; otherwise the role will fail to log in.

i) Add the role into the logged role list of the session.

4. Create a new role

a) The application issues an instruction of creating a new role.

b) The role management unit generates a unique role ID.

c) When the instruction requires the key of the to-be-created role to be a PKI key, the role management unit generates a random PKI key pair; when the instruction requires the key of the to-be-created role to be a login password, the login password of the role shall be the password specified by the instruction or generated at random by the role management unit.

d) The role management unit creates a role object in the docbase and saves the ID and the key (the public key or login password) in the role object, and the privilege of the role is null, i.e., the role has no privilege on any object.

e) Return the ID and the key (the private key or login password) to the application.

5. Grant a privilege P on an object O to a role R

When granting a privilege on an object, the simplest method includes: recording the privileges of every role on the object ( including the sub-objects thereof ) and comparing the privileges of every role when the role accesses, if an operation within the privileges, the operation shall be accepted, otherwise error information shall be returned. A preferred method applied to the present invention includes: encrypting corresponding data and controlling a privilege with a key, when a role cannot present the correct key, the role does not have corresponding privilege. This preferred method provides better anti-attack performance.

a) The application issues a privilege request.

b) The role management unit obtains the combination of the privileges of all roles in the logged role list on the object O and determines whether the combination is a superset of the privilege P and whether the combination includes re-license privilege. If the combination is a superset of the privilege P and the combination includes the re-license privilege, the process shall proceed, otherwise the granting of the privilege will fail (because the privileges of all the roles still do not include a privilege used for granting).

c) The role management unit adds the privilege P on the object O into the privilege list of the role R. If the privilege P does not include read or write privilege, the privilege granting process is completed, otherwise the process continues.

d) The access control unit checks whether read / write access control privilege is set up on the object O. If read / write access control privilege is set up on the object O, Proceed Step e). If no read / write access control privilege is set up on the object O, steps as follows shall be performed.

i. Generate a random symmetric key and a random PKI key pair.

ii. Encrypt the object O with the symmetric key. If the read / write access control privilege has already set up on a sub-object of the object O, the sub-object shall remain unchanged.
There is a PKI key pair for a data region to be protected (usually a subtree corresponding to an object and the sub-objects thereof), and the data region is encrypted with the encryption key of the PKI key pair.

iii. Encrypt the symmetric key with the encryption key of the PKI key pair, save the cipher data and sign the target object.

iv. Check all roles in the docbase. If a role has read privilege on object O ( here the object O may be a sub-object of the object on which the role has the read privilege), the decryption key shall be encrypted with the public key of the role and cipher data of the decryption key is saved in the privilege list of the role. If a role has write privilege on object O (here the object O may be a sub-object of the object on which the role has the write privilege), the encryption key shall be encrypted with the public key of the role and cipher data of the encryption key is saved in the privilege list of the role.

v. Proceed Step h).

e) Choose a role that has needed privilege (the read privilege or write privilege) on the object O from all logged roles.

f) Obtain the cipher data of a corresponding key corresponding to the object O from the privilege list of the role ( the read privilege requires the decryption key and the write privilege requires the encryption key, the combination of the read privilege and write privilege requires both keys), if the key of the role is a PKI key, the cipher data of the corresponding key is sent to the application and Step g) is performed; if the key of the role is a login password, the access control unit decrypts the cipher data of the corresponding key and then Step h) is performed. When a role is granted the read privilege, the decryption key of the PKI key pair is passed to the role and the role may decrypt the data region with the decryption key to read the data correctly. When a role is granted the write privilege, the encryption key of the PKI key pair is passed to the role and the role may encrypt modified data with the encryption key in order to write data into the data region correctly.

g) The application decrypts cipher data of the corresponding key with the private key of the role to retrieve the key and returns the key to the access control unit.

h) The access control unit encrypts corresponding key according to the privilege P, generates corresponding cipher data of the corresponding key and saves the cipher data into the privilege list of the role R.

When a role is given an encryption key or decryption key, the encryption key or decryption key may be saved after being encrypted with the public key of the role, so that the encryption key or decryption key can only be retrieved with the private key of the role.
Since the encryption / decryption efficiency of the PKI keys is low, a symmetric key may be used for encrypting the data region and the symmetric key is further encrypted with the encryption key while the cipher data of the symmetric key is decrypted with the decryption key to retrieve the correct symmetric key. The encryption key may be further used for signing the data region to prevent a role with read privilege only from modifying the data region when the role is given the symmetric key. In such case a role with write privilege signs the data region every time when the data region is modified; therefore the data will not be modified by any role without write privilege.

6. Bereave a role R of a privilege P on an object O

a) The application issues a request of bereaving of a privilege.

b) The role management unit checks all roles in the logged role list to determine whether there is a role has a bereave privilege on the object O. If no role has the bereave privilege, the process of bereaving of the privilege will fail, otherwise the process continues.

c) Delete the privilege P from the privileges of the role R on the object O.

d) If the privilege P includes read or write privilege, corresponding decryption key or encryption key for the object O shall be removed from the privilege list of the role R.

7. Read an object O

a) The application issues an instruction of reading the object O.

b) The access control unit checks the privileges of all roles in the logged role lists on the object O and direct or indirect parent objects of the object O, and determines whether there is at least one role in the logged role lists has read privilege on the object O or on a direct or indirect parent object of the object O. If no role has the read privilege, the reading process fails, otherwise the process continues.

c) Check whether read / write access control privilege is set up on the object O. If no read / write access control privilege is set up, check the parent object of the object O and the parent object of the parent object until an object with the read / write access control privilege is found.

d) Choose a role that has the read privilege on the found object.

e) Extract the cipher data of the decryption key of the found object from the privilege list of the role, when the key of the role is a PKI key, the cipher data of the decryption key is sent to the application and Step f) is performed; when the key of the role is a login password, the access control unit decrypts the cipher data of the decryption key and Step g) is performed.

f) The application decrypts the cipher data of the decryption key with the private key of the role to retrieve the decryption key and returns the decryption key to the access control unit.

g) The access control unit decrypts cipher data of the symmetric key of the object with the decryption key to retrieve the symmetric key of the object.

h) Decrypt cipher data of the data region of the object O with the symmetric key to retrieve the data of the object O.

i) Return the decrypted data of the object O to the application.

8. Write an object O

a) The application issues an instruction of writing into the object O.

b) The access control unit checks the privileges of all roles in the logged role lists on the object O and direct or indirect parent objects of the object O, and determines whether there is at least one role in the logged role lists has write privilege on the object O or on a direct or indirect parent object of the object O. If no role has the write privilege, the writing process fails, otherwise the process continues.

c) Check whether read / write access control privilege is set up on the object O. If no read / write access control privilege is set up, check the parent object of the object O and the parent object of the parent object until an object O1 with the read / write access control privilege is found.

d) Choose a role that has the write privilege on the object O1.

e) Extract the cipher data of the encryption key of the object O1 from the privilege list of the role. When the key of the role is a PKI key, the cipher data of the encryption key is sent to the application and Step f) is performed. When the key of the role is a login password, the access control unit decrypts the cipher data of the encryption key and Step g) shall be performed.

f) The application decrypts the cipher data of the encryption key with the private key of the role to retrieve the encryption key of the object O1 and returns the encryption key of the object 01 to the access control unit.

g) Encrypt modified data of the object O with the encryption key of the object O1 (if read / write access control privilege is set up on a direct or indirect sub-object of the object O, the sub-object is encrypted with the original key of the sub-object).

h) Overwrite the original data with the encrypted data and the writing process shall end.

9. Sign an object O to obtain a signature

a) The application issues an instruction of signing the object O.

b) The access control unit regularizes the data of the object O.
When an object is signed to obtain a signature, the subtree starting from the node corresponding to the object is signed to obtain the signature. The regularization should be done first so that the signature will be free from being affected by physical storage variation, i.e., by logically equivalent alterations (e.g., change of pointer caused the change of storage position). The regularization method is given in the fore-going description.

c) Calculate HASH value of the regularization result.

d) Send the HASH value to the application.

e) The application encrypts the HASH value with the private key of the role, i.e., the process of signing to obtain a signature, in the logged role list if the key of the role is a PKI key.

f) The application returns the signature result to the access control unit.

g) The access control unit saves the signature result in a digital signature object.

10. log out a logged role

a) The application issues an instruction for logging out a logged role.

b) The security session channel unit deletes the logged role from the logged role list if the logged role list includes the logged role.

11. Terminate session

a) Either the application or the docbase management system issues a session termination request.
b) The security session channel unit terminates all threads related to the present session, erases the session identification and deletes the logged role list.

The following is an embodiment of the method for document data security control of the present invention applied on a computer.

```
 class UOI_RoleList: public UOI_Obj
 {
 public:
//! Get the role number in the list
 int GetRoleCount();
//! Get a role according to a specified index
UOI_Role *GetRole(int nIndex);
//! Creat a role
/*!
\param pPrivKey Private key cache
\param pnKeyLen Return the length of the actual private key
\return the newly created role
 */
UOI_Role AddRole(unsigned char *pPrivKey, int *pnKeyLen);
//! Constructor function
UOI_RoleList();
//! Destructor function
virtual ~UOI_RoleList();
 };

class UOI_Role : public UOI_Obj
{
public:
//! Constructor function
UOI_Role();
//! Destructor function
 virtual ~UOI_Role();
 //! Get a role ID
 int GetRoleID();
 //! Set Role ID
 /*!
    \param nID a role ID
     */
    void SetRoleID(int nID);
    //! Get a role name
     const char * GetRoleName();
```

34

```
    //! Set a role name
    /*!
    \param szName Role name
     */
    void SetRoleName(const char *szName);
};


class UOI_PrivList: public UOI_Obj // privilege list
 {
public:
    //! Get the privilege of a specified role
    UOI_RolePriv *GetRolePriv (UOI_Role *pRole);
    //! Create a privilege item for a role
    UOI_RolePriv *pPriv AddRole ();
    //! Get the number of the privileges of a role in the list
    int GetRolePrivCount();
    //! Get the privilege item of the role according to an index value
    UOI_RolePriv *GetRolePriv (int nIndex);
    //! Constructor function
    UOI_PrivList();
    //! Destructor function
    virtual ~UOI_PrivList();
};


class UOI_RolePriv : public UOI_Obj // all privileges of a role
 {
 public:
     //! Get a role
     UOI_Role *GetRole();
 //! Set privileges on an object; when the privileges exceed present privileges of the
role on the object, the action constitutes granting the privileges, and when the privileges
are narrower than present privileges of the role on the object, the action constitutes
bereaving of the privileges. The currently logged role must have the corresponding
re-license privilege or bereave privilege.
 bool SetPriv(UOI_Obj *pObj, UOI_Priv *pPriv);
 //! Get the number of granted privileges
 int GetPrivCount();
     //! Get the object on which the privilege corresponding to the index value is
granted
     UOI_Obj *GetObj(int nIndex);
     //! Get the privilege granted by the privilege corresponding to the index value
     UOI_Priv *GetPriv(int nIndex);
 //! Get the privilege on an object
 UOI_Priv *GetPriv(UOI_Obj *pObj);
 //! Constructor function
     UOI_RolePriv ();
     //! Destructor function
     virtual ~UOI_RolePriv ();
};


class UOI_Priv : public UOI_Obj
 {
 public:
 enum PrivType { // definition of privilege types
     PRIV_READ, // read privilege
     PRIV_WRTTE, // write privilege
     PRIV_RELICENSE, // re-license privilege
     PRIV_BEREAVE, // bereave privilege
     PRIV_PRINT, // print privilege
     Definitions of other privileges
 }
     //! whether there is corresponding privilege
     bool GetPriv(PrivType privType);
```

```
    //! Grant corresponding privilege
    void SetPriv(PrivType privType, bool bPriv);
//! Constructor function
    UOI_Priv ();
    //! Destructor function
    virtual ~UOI_Priv ();
};


class UOI_SignList: public UOI_Obj
{
public:
    //! Constructor function
    UOI_SignList();
    //! Destructor function
    virtual ~UOI_SignList();

    //! Add a new node signature and return the index value thereof
    int AddSign(UOI_Sign *pSign);
    //! Get a node signature according to a specified index value
    UOI_Sign GetSign(int index);
    //! Delete a node signature according to a specified index value
    void DelSign(int index);
  //! Get the number of the node signatures in the list
    int GetSignCount();
};


class UOI_Sign : public UOI_Obj
 {
 public:
    //! Constructor function
    UOI_Sign();
    //! Destructor function
    virtual ~UOI_Sign();

    //! Sign to obtain a signature
    /*!
    \param pDepList the dependency list of the signature
    \param pRole the role that signs
    \param pObj the object signed to obtain the signature
    */
    void Sign(UOI_SignDepList pDepList, UOI_Role pRole , UOI_Obj pObj);
    //! Verify the signature
    bool Verify();
    //! Get the dependency list of the signature
    UOI_SignDepList GetDepList();
 };


class UOI_SignDepList : public UOI_Obj
{
public:
    //! Constructor function
    UOI_SignDepList();
    //! Destructor function
    virtual ~UOI_SignDepList();

    //! Insert a dependency item
     void InsertSignDep(UOI_Sign *pSign);
    //! Get the number of the dependency item
     int GetDepSignCount();
    //! Get a dependency item according to a specified item
     UOI_Sign *GetDepSign(int nIndex);
 };
```

The steps described above can be enhanced or simplified in practical applications to improve work efficiency, e.g., the private keys of the roles may be cached in the session data (which will be deleted when the session is terminated), therefore the private keys need not to be sent to the application for decryption every time, or some security measures may be omitted, or some functions may be removed. To sum up, all simplifications of the method are equivalent modifications of the method of the present invention.

This embodiment of the present invention provides the system for security control by providing a tree structure for document management; identity authenticates is performed based on a role, and in a security session related to security authentication, multiple roles are allows to log in, and the identity authentication, privilege control, signature and signature verification are provided based on the roles.When control the access, the privileges for security control on document data of any subtree can be specified and granted by a role. In the present security session, the privileges of the document data of a certain subtree are the combination of the privileges of all roles. In the security session, the privileges for security control on the document data can be granted and bereaved of by a role. And the access control is provided by encrypting the document data of any subtree. Any subtree data can be signed to obtain a signature and the signature also can be verified , the process of signing is performed with the private key of a role in the role list unit during the process of the security session. Before the document data of a tree structure is signed, the tree can be regularized so as to guarantee that different nodes obtain different digital signatures.

The present invention also provides a system for document data security control in which identity authentication, access control and signature verification are integrated and the identity authentication, access control and signature verification on document data are not limited to specific document data. All possible document data in the system can be under security control, i.e., can be subject to authentication, access control, signature and signature verification.

The document security technique provided by the present invention, including role oriented privilege management, security session channel, role authentication, login of multiple roles, regularization of tree structure, fine-grained privilege management unit, privilege setup based on encryption, etc., can be applied to other environment as well as the document processing system provided by the present invention, and the present invention does not limit the environment to which the document security technique is applied.

In the document processing system to which the present invention is applied, an "adding without altering" scheme is adopted to enable the document processing system to be paper fidelity. Every application adds new contents into the existing document contents without altering or deleting any existing document contents, therefore a page of the document is like a piece of paper on which different people may write or draw with different pens while nobody may alter or delete existing contents. To be specific, an application, while editing a document created by another application, adds a new layer into the document and puts all the contents added by the application into the new layer without altering or deleting contents in existing layers. Therefore every layer of the document can be managed and maintained by one application and no other application shall be allowed to edit the layer. Since society works based on paper, as long as matching all features of paper, the document processing system will perfectly satisfy all practical needs at present and is sufficiently practical.

A digital signature object of a layer can be used for guaranteeing that the contents on the layer is not altered or deleted. the contents of the layer may be signed to obtain the digital signature, yet preferably, the contents of the layer and the contents of all layers created before the layer are signed to obtain the digital signature. The signature does not prevent further editing of the document such as inserting new comment into the documents, and the signature shall always remain valid as long as the newly added contents are placed in a new layer without modifying the layers which are signed to obtain the signature, however the signer of the signature is responsible only for the contents before the signature is created and is not responsible for any contents added after the signature is created. This technical scheme perfectly satisfies practical needs and is highly valuable in practical since the signature techniques in the prior art either forbid editing or destroy the signature after editing (even though the editing process including only adding without altering).

The technical scheme provided in the fore-going description does not allow alteration of existing contents in the document, even not in consideration of paper features and digital signature, all modifications shall still be made based on a layout object, i.e., editing (adding, deleting, modifying) of a layout object does not affect any other layout objects. When a user needs to edit existing contents in the document in original way, another technical scheme will satisfy the need well. The technical scheme allows the application to embed a source file (a file which is saved in the format of the application's own and which keeps a full relation record of all objects in the document, e.g., a .doc file) into the document after the application has finished the initial editing and created a new layer for the newly edited contents. Next time when the document needs to be edited, the source file will be extracted from the document and the document is edited by using the source file. After the second editing process, the layer managed by the application shall be cleaned and the contents of the layer are regenerated, and also the modified source file shall be embedded into the document again.

To be specific, the technical scheme includes steps as follows.

1. When the application processes the document for the first time, the application creates a new layer and inserts the layout object(s) corresponding to the newly added contents into the new layer, at the same time the application saves the newly added contents in the format defined by the application (i.e., the source file).

2. Create a source file object under the document object as a sub-object of the document object to embed the source file (e.g., embed as a whole in binary data format), and record the layer corresponding to the source file object.

3. When the same application edits the document for the second time, the application extracts corresponding source file from corresponding source file object.

4. The application continues to edit the contents on corresponding layer by modifying the source file. Since the source file is saved in the format defined by the application, the application may edit the contents with functions of the application.

5. After the second editing process ends, the contents of the layer shall be updated according to the newly edited contents (e.g., by the mode of regenerating all after cleaning all), and the modified source file shall be embedded into the document object again.

6. Such process will be repeated to enable the application to edit the existing contents in the document in a conventional way.

The technical scheme of the present invention can maximize the document interoperability. When the technical scheme of the present invention is applied to both applications and documents, and and sufficient security privileges are granted, following functions can be achieved.

1. All types of applications can correctly open, display and print all types of documents.

2. All types of applications can add new contents to all types of documents without damaging existing signatures in the documents.

3. While a signature is not considerable (no signature exists or an existing signature is allowed to be destroyed), all types of applications can edit existing contents of all types of documents based on layouts.

4. Existing contents of all types of documents can be edited in the conventional way by the original application that created the existing contents in the documents.

It can be seen that the present invention greatly facilitates the management, interoperability and security setting for the document by the layer management.

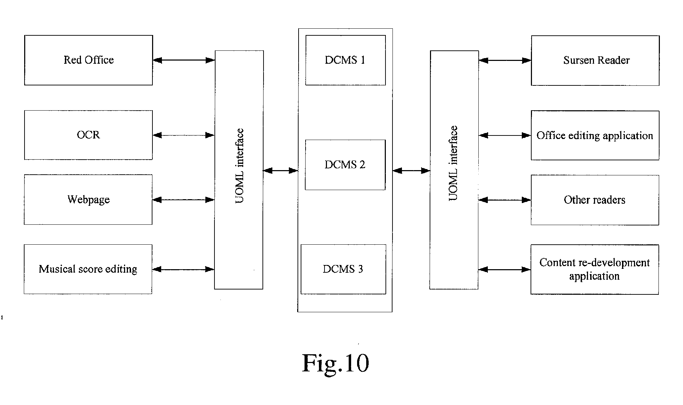

An embodiment of the present invention is given hereinafter with reference to Fig. 10 to illustrate an operation performed by the document processing system conforming with the present invention. In the embodiment, the application initiates an operation on a document through a unified interface standard (e.g., UOML interface). The docbase management systems may have different types, developed by different manufacturers, but the application developers always face a same interface standard so that the docbase management systems from any manufacturer can cooperation with the application. The application e.g., Red Office, OCR, webpage generation software, musical score editing software, Sursen Reader, Microsoft Office, or any other reader applications etc., instructs a docbase management system via the UOML interface to perform an operation. Multiple docbase management systems may be employed, as shown in the Fig.10 as DCMS 1, DCMS 2 and DCMS 3. The docbase management systems perform the operation on the document conforming with the universal document model, e.g., creating, saving, displaying and presenting the document, according to a unified standard instruction from the UOML interface. In the present invention, different applications may invoke a same docbase management system at the same time or at different time, and a same application may invoke different docbase management systems at the same time or at different time.

The present invention provides better security mechanism, multiple role setup and fine-grained role privilege setup. The "fine-grained" includes two aspects: on one hand, a privilege may be granted on a whole document or any tiny part of the document, on the other hand, varieties of privileges may be set up besides the conventional three privilege levels of write / read / inaccessible.

The present invention improves system performance and provides better transplantability and scalability. Any platform with any function may use a same interface, therefore the system performance can be optimized continuously without altering the interface standard, and the system may be transplanted to different platforms.

The foregoing description is only preferred embodiments of the present invention and is not for use in limiting the protection scope thereof. All the modifications, equivalent replacements or improvements in the scope of the present invention's sprit and principles shall be included in the protection scope of the present invention.

**Claims**

1. A method for document data security control, applied to a docbase management system used for managing a document or a docbase which comforms with universal document model, comprising:

   creating a role of the docbase or document;
   granting a privilege to the role;
   using the role to log in the document or docbase and
   checking the privilege of the logged role when accessing the document or docbase through the docbase management system.

2. The method according to Claim 1, wherein creating a role of a docbase or document comprises: creating the role of the docbase or document by an application through the docbase management system; and
   said using the role to log in the document or docbase comprises: using the role to log in the document or docbase by the application through the docbase management system.

3. The method according to Claim 2, before using the role to log in the document or the docbase comprising: setting up a security session between the application and the docbase management system.

4. The method according to Claim 3, wherein setting up a security session between the application and the docbase management system comprises:

   generating a random PKI key pair including a public key and a private key by any of the application and the docbase management system, and sending the public key to the other party than the generator of the PKI key pair;
   generating a random symmetric key as the session key by the receiver of the public key, encrypting the session key with the public key and sending the encrypted session key to the generator of the PKI key pair; and
   decrypting the received encrypted session key with the private key of the PKI key pair to retrieve the session key by the generator of the PKI key pair.

5. The method according to Claim 1, wherein granting a privilege to the role comprises: granting to the role a privilege on part of or all the objects in a universal document model instance.

6. The method according to Claim 5, wherein part of or all the objects in the universal document model instance comprise any one or any combination of: a docbase object, docset object, document object, page object, layer object, object stream and layout object. for describing layout.

7. The method according to Claim 5, wherein granting a privilege to the role comprises:

   issuing a privilege request by the application to request granting a target privilege to a target role on a target object; and
   calculating the union of the privileges of all the logged roles of the application on the target object and adding the target privilege into the privileges of the target role if the union is a superset of the target privilege and re-license privilege.

8. The method according to Claim 7, after adding the target privilege into the privileges of the target role, if the target privilege includes read privilege, further comprising: encrpting the target object and saving the decryption key of the target object into the target role.

9. The method according to Claim 7, after adding the target privilege into the privileges of the target role, if the target privilege includes write privilege, further comprising: encrypting the target object and saving the encryption key of the target object into the target role.

10. The method according to Claim 8, wherein saving the decryption key of the target object into the target role comprises: encrypting the decryption key with a key corresponding to the role and saving the cipher data of the decryption key.

11. The method according to Claim 9, wherein saving the encryption key of the target object into the target role comprises: encrypting the encryption key with a key corresponding to the role and saving the cipher data of the encryption key.

12. The method according to any of Claims 8-11, wherein encypting the target object comprises:

generating a random symmetric key and a random PKI key pair;
encrypting the target object with the symmetric key;
encrypting the symmetric key with the encryption key of the PKI key pair, saving the cipher data of the symmetric key and attaching a signature to the target object.

13. The method according to Claim 1, further comprising: creating a default role when the docbase or document is created, wherein the default role is granted all privileges on the docbase object or document object and the sub-objects thereof.

14. The method according to any of Claims 5-13, wherein the privilege includes any one or any combination of: read privilege, write privilege, re-license privilege and bereave privilege.

15. The method according to Claim 1, wherein creating a role of a docbase or document comprises:

requesting by the application to create a new role of a target docbase object or document object;
creating a role object of the new role by the docbase management system.

16. The method according to Claim 15, wherein creating a role object of the new role by the docbase management system comprises:

generating an unique role ID and an unique role key;
creating a role object of the new role by the docbase management system;
saving the role ID and the key into the role object; and
sending the role ID and the key of the role object to the application.

17. The method according to Claim 16, wherein the privilege of the newly created role is set as no privilege on any object.

18. The method according to Claim 16, wherein using the role to log in the document or the docbase comprises:

providing, by the application, the ID of the role to be logged;
authenticating the identity of the role by the docbase management system with the key saved in the role object of the role; and
logging in successfully if passes the identity authentication.

19. The method according to Claim 18, wherein authenticating the identity of the role with the key saved in the role object of the role comprises:

authenticating the identity of the role through a Challenge-Response approach, when the key saved in the role object is a public key of a random PKI pair; or
comparing the login password saved in the role object of the role with the login password from the application, when the key saved in the role object is a login password.

20. The method according to Claim 1, further comprising: bereaving the role of a privilege on a target object.

21. The method according to Claim 20, wherein bereaving the role of a privilege on a target object comprises:

issuing a bereaving request by the application to request bereaving a target role of a target privilege on a target object;
checking all logged role(s) of the application, if the privilege(s) of logged role(s) including the bereave privilege on the target object,
deleting the target privilege from the privileges of the target role on the target object.

22. The method according to Claim 21, wherein deleting the target privilege from the privileges of the target role on the target object comprises:

deleting the decryption key and/or encryption key corresponding to the target privilege of the target role on the target object when the target privilege includes read and/or write privilege.

23. The method according to Claim 1, wherein, when said accessing the docbase or document is to read an object in the docbase or document, said accessing comprises:

issuing an instruction by the application requesting to read a target object;
checking the privileges of all logged roles of the application on the target object, and when at least one role has read privilege on the target object, performing the following steps:

11) check whether read/write access control privilege is set up on the target object, if no read/write access control privilege is set up, perform Step 12; otherwise perform Step 13;
12) check all level parent objects of the target object for the object having set up read/write access control privilege;
13) choose a role that has the read privilege on the object having set up read/write access control privilege, send the application the cipher data of the decryption key of the object saved in the privilege of the chosen role;
14) decrypt, by the application, the cipher data of the decryption key with the private key of the chosen role to retrieve the decryption key and return the decryption key;
15) decrypt cipher data of the symmetric key of the object having set up read/write access control privilege with the returned decryption key, to retrieve the symmetric key of the object; decrypt cipher data of the data of the object with the symmetric key to retrieve the data of the object, and return the decrypted data to the application.

24. The method according to Claim 1, wherein, when said accessing the docbase or document is to write into an object in the docbase or document, said accessing comprises:

issuing an instruction by the application requesting to write into a target object;
checking the privileges of all logged roles of the application on the target object, and when at least one role has write privilege on the target object, performing the following steps:

21) check whether read/write access control privilege is set up on the target object, if no read/write access control privilege is set up, perform Step 22; otherwise perform Step 23;
22) check all level parent objects of the target object for the objects having set up read/write access control privilege;
23) choose a role that has the write privilege on the object having set up read/write access control privilege, send the application the cipher data of the encryption key of the object saved in the privilege of the chosen role;
24) decrypt, by the application, the cipher data of the encryption key with the private key of the chosen role and return the encryption key;
25) encrypt new data of the object having set up read/write access control privilege with the returned encryption key and overwrite the original data with the new encrypted data.

25. The method according to Claim 1, further comprising: attaching a digital signature to an object in the docbase or document.

26. The method according to Claim 25, wherein attaching a digital signature to an object in the docbase or document comprises:

regularizing the object, calculating the HASH value of the regularization result and sending the HASH value to the application;
encrypting, by the application, the HASH value with the private key of the logged role of the application and returning a signature result.

27. The method according to Claim 26, wherein the said object and its all level sub-objects corresponds to a subtree; and said regularizing comprises:

regularizing each node in the subtree according to a predetermined tree traversal order, and joining the regularization results to obtain the regularization result of the object.

28. A regularization method, used for regularizing a tree structure, comprising:

regularizing each node in the tree structure according to a predetermined traversal order, and joining the regularization result of each node to obtain the regularization result of the tree structure.

29. The method according to Claim 28, wherein the traversal comprises depth-first traversal or width-first traversal.

30. The method according to Claim 28, wherein, when a node references another node in the tree structure, the referenced node, as a sub-node of the referencing node, is participated in the traversal for calculating the regularization result of the referencing node.

31. The method according to Claim 28, wherein regularizing each node in the tree structure comprises:

joining, according to a predetermined order, original values or transformed values of: the sub-node number of the node, the node type and the node attributes, and taking the original value or transformed value of the join result as the regularization result of the node.

32. The method according to Claim 31, wherein regularizing each node in the tree structure comprises:

joining, according to a predetermined order, original values or transformed values of: the sub-node number of the node, the node type, the node attributes, as well as anyone or any combination of original values or transformed values of: the sub-node number length, the node type length and the node attribute lengths; and taking the original value or transformed value of the join result as the regularization result of the node.

33. The method according to Claim 31 or 32, wherein the joining comprises: joining directly or with separators in between.

34. The method according to Claims 31 or 32, wherein the transformed value comprises HASH value.

35. A docbase management system used for security control of documents or docbases conforms with a universal document model, comprising:

a role management unit, used for creating a role of a document or docbase and granting a privilege to the role;
an identity authentication unit, used for authenticating the identity of the role through the role management unit when the role logs in the document or docbase; and
an access control unit, used for checking the privilege of the logged role through the role management unit and the identity authentication unit when accessing the document or the docbase.

36. The system according to Claim 35, further comprising:

a security session channel unit, used for setting up a security session with the application by using a random session key known to the security session channel unit and the application only.

37. The system according to Claim 35, wherein the role management unit is further used for bereaving of a privilege granted to a role.

38. The system according to Claim 35, wherein the role management unit is further used for granting to a role a privilege on part of or all the objects in a universal document model instance.

39. The system according to Claim 38, wherein part of or all the objects in the universal document model instance comprise any one or any combination of: a docbase object, docset object, document object, page object, layer object, object stream and layout object.

40. The system according to Claim 35, wherein, when reading an object in the docbase or document, the access control unit is further used for checking the privileges of all logged roles on an object, obtaining the decryption key of the object and decrypting the data of the object with the decryption key if at least one role has read privilege on the object.

**41.** The system according to Claim 35, wherein, when writing into an object in the document or docbase, the access control unit is further used for checking the privileges of all logged roles on an object, obtaining the encryption key of the object and overwriting the original data of the object with new data encrypted with the encryption key if at least one role has write privilege on the object.

**42.** The system according to Claim 35, wherein the access control unit is further used for regularizing the docbase object or document object, obtaining the HASH value of the regularization result, extracting the private key of the logged role from the role management unit and encrypting the obtained HASH value with the private key to obtain a signature result.

**43.** A system for document data security control, comprising:

a role management unit, used for creating a role of a document and granting privilege on a document object, page object or sub-objects of page object to the role;

an identity authentication unit, used for authenticating the identity of the role through the role management unit when the role logs in the document; and

an access control unit, used for checking the privilege of the logged role through the role management unit and the identity authentication unit when accessing the document.

```
┌─────────────────────────────────────┐
│   Application layer (Application)    │
└─────────────────────────────────────┘
                  ↕
┌─────────────────────────────────────┐
│  Interface layer (Standard Interface) │
└─────────────────────────────────────┘
                  ↕                          ┌──────────────┐
┌─────────────────────────────────────┐      │              │
│     Docbase management system       │ ⟺   │ Storage device │
└─────────────────────────────────────┘      │              │
                                             └──────────────┘
```

## Fig.1

```
┌─────────────────────────────────┐
│      Document warehouse         │
└─────────────────────────────────┘
                 ↓
┌─────────────────────────────────┐
│           Docbase               │
└─────────────────────────────────┘
                 ↓
┌─────────────────────────────────┐
│           Docset                │
└─────────────────────────────────┘
                 ↓
┌─────────────────────────────────┐
│          Document               │
└─────────────────────────────────┘
                 ↓
┌─────────────────────────────────┐
│            Page                 │
└─────────────────────────────────┘
                 ↓
┌─────────────────────────────────┐
│            Layer                │
└─────────────────────────────────┘
                 ↓
┌─────────────────────────────────┐
│         Object group            │
└─────────────────────────────────┘
                 ↓
┌─────────────────────────────────┐
│         Layout object           │
└─────────────────────────────────┘
```

## Fig.2

Fig.3

Fig.4

```
                    ┌─────────────────────┐
                    │    Docset object    │
                    └──────────┬──────────┘
          ┌────────────────────┼────────────────────────┐
┌──────────────────┐  ┌──────────────────┐     ┌──────────────────────┐
│  Document object │  │   Docset object  │- - -│  Docset helper object│
└──────────────────┘  └──────────────────┘     └──────────────────────┘
```

## Fig.5

```
┌──────────┐            ┌──────────────────────────────┐
│          │       ┌────│          Page object         │
│          │       │    └──────────────────────────────┘
│ Document │       │    ┌──────────────────────────────┐
│ object   │───────┼────│    Document helper object    │
│          │       │    └──────────────────────────────┘
│          │       │    ┌──────────────────────────────┐
│          │       └────│    Document shared object     │
└──────────┘            └──────────────────────────────┘
```

## Fig.6

```
┌─────────────────────┐
│     Page object     │
└─────────────────────┘
```

```
┌─────────────────┐          ┌──────────────────────┐
│   Layer object  │          │  Page helper object  │
└─────────────────┘          └──────────────────────┘
```

Fig.7

```
┌─────────────────────┐
│     Layer object    │
└─────────────────────┘
```

```
┌─────────────────┐    ┌─────────────────┐    ┌──────────────────────┐
│  Layout object  │    │  Object stream  │ -- │  Layer helper object │
└─────────────────┘    └─────────────────┘    └──────────────────────┘
```

Fig.8

```
                              ┌─────────────────────────────┐
                      ┌───────┤       Status object         │
                      │       └─────────────────────────────┘
                      │       ┌─────────────────────────────┐
                      ├───────┤      Character object        │
                      │       └─────────────────────────────┘
                      │       ┌─────────────────────────────┐
                      ├───────┤    Line, curve, arc objects  │
                      │       └─────────────────────────────┘
                      │       ┌─────────────────────────────┐
                      ├───────┤        Path object          │
                      │       └─────────────────────────────┘
                      │       ┌─────────────────────────────┐
                      ├───────┤    Gradient color object     │
                      │       └─────────────────────────────┘
                      │       ┌─────────────────────────────┐
                      ├───────┤        Image object         │
                      │       └─────────────────────────────┘
                      │       ┌─────────────────────────────┐
                      ├───────┤    Streaming media object    │
  ┌──────────┐        │       └─────────────────────────────┘
  │          │        │       ┌─────────────────────────────┐
  │  Layout  ├────────┼───────┤      Metadata object         │
  │  object  │        │       └─────────────────────────────┘
  │          │        │       ┌─────────────────────────────┐
  └──────────┘        ├───────┤        Note object          │
                      │       └─────────────────────────────┘
                      │       ┌─────────────────────────────┐
                      ├───────┤  Semantic information object │
                      │       └─────────────────────────────┘
                      │       ┌─────────────────────────────┐
                      ├───────┤     Source file object       │
                      │       └─────────────────────────────┘
                      │       ┌─────────────────────────────┐
                      ├───────┤        Script object        │
                      │       └─────────────────────────────┘
                      │       ┌─────────────────────────────┐
                      ├───────┤       Plug-in object         │
                      │       └─────────────────────────────┘
                      │       ┌─────────────────────────────┐
                      ├───────┤     Binary data object       │
                      │       └─────────────────────────────┘
                      │       ┌─────────────────────────────┐
                      ├───────┤      Bookmark object         │
                      │       └─────────────────────────────┘
                      │       ┌─────────────────────────────┐
                      └───────┤      Hyperlink object        │
                              └─────────────────────────────┘
```

Fig.9

Fig.10

```
                    ┌──────────────┐
                    │    Start     │
                    └──────┬───────┘
                           │
                           ▼
          ┌────────────────────────────────────┐
          │ Set privileges of the default role │
          │    on the document data            │
          └────────────────┬───────────────────┘
                           │
                           ▼
              ┌────────────────────────┐
              │    Initiate a session  │
              └────────────┬───────────┘
                           │
                           ▼
              ┌────────────────────────┐
              │     A role logs in     │
              └────────────┬───────────┘
                           │
                           ▼
              ┌────────────────────────┐
              │    Create a new role   │
              └────────────┬───────────┘
                           │
                           ▼
        ┌───────────────────────────────────────┐
        │ Grant a privilege on an object to a role│
        └──────────────────┬────────────────────┘
                           │
                           ▼
        ┌───────────────────────────────────────┐
        │ Bereave a role of a privilege on an object│
        └──────────────────┬────────────────────┘
                           │
                           ▼
              ┌────────────────────────┐
              │     Read an object     │
              └────────────┬───────────┘
                           │
                           ▼
              ┌────────────────────────┐
              │     Write an object    │
              └────────────┬───────────┘
                           │
                           ▼
              ┌────────────────────────┐
              │  Attach a signature to │
              │       an object        │
              └────────────┬───────────┘
                           │
                           ▼
              ┌────────────────────────┐
              │  A logged role logs out│
              └────────────┬───────────┘
                           │
                           ▼
              ┌────────────────────────┐
              │   Terminate the        │
              │       session          │
              └────────────────────────┘
```

# Fig.11

<table>
<tr><td colspan="2" align="center">**INTERNATIONAL SEARCH REPORT**</td><td>International application No.<br><br>PCT/CN2006/003294</td></tr>
</table>

| A. CLASSIFICATION OF SUBJECT MATTER |
|---|
| G06F21/00 (2006.01) i |
| According to International Patent Classification (IPC) or to both national classification and IPC |

| B. FIELDS SEARCHED |
|---|

| Minimum documentation searched (classification system followed by classification symbols) |
|---|
| IPC: G06F21/ G06F17/ G06K15/ G06F15/ G06F12/ G09C1/ H04L9/ |

| Documentation searched other than minimum documentation to the extent that such documents are included in the fields searched |
|---|
| |

| Electronic data base consulted during the international search (name of data base and, where practicable, search terms used) |
|---|
| EPODOC WPI CNPAT PAJ CNKI |
| document? safe+ secur+ encrypt+ decrypt+ key? authori+ limit? right? regular+ node? tree? travers+ |

### C. DOCUMENTS CONSIDERED TO BE RELEVANT

| Category* | Citation of document, with indication, where appropriate, of the relevant passages | Relevant to claim No. |
|---|---|---|
| X | US2004/0237035A1, 25 Nov. 2004 (25.11.2004), Cummins, [0008] to [0031] | 1-3, 5-7, 13, 15-18, 20, 21, 25, 35-39, 43 |
| Y | | 4, 8-12, 14, 19, 22-24, 26-27,40-42 |
| Y | CN1558594A, 29 Dec. 2004 (29.12.2004), HARBIN INST TECHNOLOGY, page 5 line10 to page 12 line 9 | 4, 8-12, 14, 19, 22-24, 40-41 |
| X | US2005/0097077A1, 05 May 2005 (05.05.2005), Bolosky et al., [0035] to [0197] | 28-34 |
| Y | | 26,27,42 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 01 Mar. 2007 (01.03.2007) | 1 5 · MAR 2007 (1 5 · 0 3 · 2 0 0 7) |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>LI,Qiong<br><br>Telephone No. 86-10-62084932 |
|---|---|

## INTERNATIONAL SEARCH REPORT

| | International application No. |
|---|---|
| | PCT/CN2006/003294 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

For claim 1: a document data security management method, which applies to a document base system that manages a document or a document base corresponding to a universal document pattern, includes: creating a role of said document base or document; assigning a authority to said role; logging in said document or document base with said role; when visiting the document or document base through the document base system, checking the authority of logined role.

For claim 28: a regularization method for regularizing a tree structure, includes: calculating a regular result of each node in the tree structure in predetermined traversal sequence, and combining into a regular result of the tree structure.

Thereby, claims 1 and 28 don't contain any same or corresponding technical feature.

1. ☐ As all required additional search fees were timely paid by the applicant, this international search report covers all searchable claims.

2. ☒ As all searchable claims could be searched without effort justifying an additional fees, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

| INTERNATIONAL SEARCH REPORT | | International application No. | |
| Information on patent family members | | PCT/CN2006/003294 | |

| Patent Documents referred in the Report | Publication Date | Patent Family | Publication Date |
|---|---|---|---|
| US2004/0237035A1 | 25 Nov. 2004 (25.11.2004) | WO2004104792A2 | 02 Dec. 2004 (02.12.2004) |
| | | EP1625691A2 | 15 Feb. 2006 (15.02.2006) |
| | | AU2004241605A1 | 02 Dec. 2004 (02.12.2004) |
| | | CA2524371A1 | 02 Dec. 2004 (02.12.2004) |
| CN1558594A | 29 Dec. 2004 (29.12.2004) | none | |
| US2005/0097077A1 | 05 May 2005 (05.05.2005) | US2005108240A1 | 19 May 2005 (19.05.2005) |
| | | US2005097313A1 | 05 May 2005 (05.05.2005) |
| | | US2005097318A1 | 05 May 2005 (05.05.2005) |
| | | EP1278113A2 | 22 Jan. 2003 (22.01.2003) |
| | | US2002194209A1 | 19 Dec. 2002 (19.12.2002) |